# FASCICULE DE BREVET EUROPEEN

(11) **EP 3 962 996 B1**
(45) Date de publication et mention de la délivrance du brevet: **14.06.2023**
(21) Numéro de dépôt: 20754307.5
(22) Date de dépôt: 22.04.2020
(51) Int. Cl.: C08L 9/00, C08L 21/00, C08L 23/00, C08L 23/16

(54) **COMPOSITION DE CAOUTCHOUC POUR APPLICATIONS DYNAMIQUES OU STATIQUES, SON PROCÉDÉ DE PRÉPARATION ET PRODUITS L'INCORPORANT**
KAUTSCHUKZUSAMMENSETZUNG FÜR DYNAMISCHE UND STATISCHE ANWENDUNGEN, HERSTELLUNGSVERFAHREN UND ERZEUGNISSE DIESE ENTHALTEND
RUBBER COMPOSITION FOR DYNAMIK AND STATIC APPLICATIONS, METHOD FOR PREPARATION AND PRODUCTS CONTAINING THE SAME

(30) Priorité: 03.05.2019 FR 1904690
(43) Date de publication de la demande: 09.03.2022
(73) Titulaire: Hutchinson, 75008 Paris (FR)
(72) Inventeur: DELEBECQ, Etienne, 45200 AMILLY (FR); GUO, Laina, 45200 MONTARGIS (FR)
(74) Mandataire: Plasseraud IP
(86) Numéro de dépôt international: PCT/FR2020/050684
(87) Numéro de publication internationale: WO 2020/225498

(56) Documents cités:
- WO-A1-2016/180693
- US-A1- 2015 325 830

## Description

### Domaine technique

L'invention concerne une composition de caoutchouc réticulable, son procédé de préparation, une composition de caoutchouc réticulée, un organe mécanique à fonction dynamique et un élément d'étanchéité dont au moins une partie comprend cette composition de caoutchouc réticulée. L'invention s'applique notamment à toutes applications industrielles utilisant des compositions de caoutchouc réticulées, dont ledit organe mécanique à fonction dynamique en particulier choisi parmi des supports antivibratoires et des articulations élastiques pour véhicules à moteur ou dispositifs industriels, et ledit élément d'étanchéité en particulier choisi parmi les joints d'étanchéité pour carrosserie de véhicule et les profilés d'étanchéité pour bâtiment, à titre non limitatif.

### Technique antérieure

De manière conventionnelle, le renforcement des élastomères au sein de compositions de caoutchouc est réalisé par ajout de charges telles que le noir de carbone ou la silice, afin d'améliorer les propriétés mécaniques des compositions grâce à l'effet hydrodynamique et aux interactions entre l'élastomère et les charges, d'une part, et entre les charges elles-mêmes, d'autre part. Ces charges sous forme de poudre sont dispersées dans le caoutchouc par travail thermomécanique lors du mélangeage des ingrédients de la composition, système de réticulation excepté, par un échauffement du mélange à une température maximale usuellement inférieure à 150° C, typiquement comprise entre 100 et 130° C pour un caoutchouc de type terpolymère éthylène-propylène-diène (EPDM) chargé au noir de carbone.

Cependant, ces interactions charges-élastomère et charges-charges génèrent un phénomène indésirable lié aux pertes hystérétiques que l'on désigne usuellement sous le nom d'effet Payne et qui se traduit par une non-linéarité (i.e. rigidification en amplitude) et une rigidification notamment aux basses températures des compositions de caoutchouc réticulées soumises à des sollicitations dynamiques. Cette rigidification entraîne des propriétés dynamiques pouvant s'avérer insatisfaisantes pour les compositions du fait des interactions précitées avec les charges renforçantes utilisées, propriétés dynamiques qui de manière usuelle peuvent être évaluées par la mesure, à deux amplitudes de déformations dynamiques, d'un ratio de modules de conservation G' relatifs aux modules complexes de cisaillement G* des compositions. Pour rappel, le module complexe G* est défini par l'équation G* = G' + iG", avec :
G' : partie réelle de G* appelée module de conservation ou élastique, G' caractérisant la rigidité ou le comportement viscoélastique de la composition (i.e. l'énergie conservée et totalement restituée) ; et
G" : partie imaginaire de G* appelée module de perte ou de dissipation, G" caractérisant le comportement visqueux de la composition (i.e. l'énergie dissipée sous forme de chaleur, étant précisé que le rapport G"/G' définit le facteur de perte tan delta).

Ce ratio correspond typiquement à G', mesuré à une faible amplitude de déformation dynamique, rapporté à G' mesuré à une amplitude élevée de déformation dynamique, avec les deux modules G' qui sont mesurés à une même fréquence et à une même température (e.g. G' 0,5% / G' 20%). De manière connue, G' 0,5% / G' 20% est usuellement compris entre 1,80 et 2,00 pour une composition de caoutchouc à base d'un polyisoprène (IR) et renforcée par 40 pce d'un noir de carbone de grade N330 afin d'être utilisable dans des applications dynamiques (pce : parties en poids pour 100 parties d'élastomère). En effet, on sait que dans les matériaux renforcés, le comportement viscoélastique varie dès les faibles amplitudes de déformations dynamiques, avec une décroissance sensible de G' avec une augmentation significative de la déformation.

US 8 247 494 B2 divulgue, pour pallier l'inconvénient précité de pertes hystérétiques élevées des compositions conventionnellement chargées, une composition de caoutchouc pouvant être dépourvue de noir de carbone et de silice qui est renforcée par une résine thermoplastique dispersée sous forme de domaines discrets dans une phase continue d'un caoutchouc oléfinique réticulé. Ce document enseigne de réticuler le caoutchouc exclusivement par hydrosilylation, pour la formation de ponts de réticulation au silicium.

JP 2002-155 148 A2 divulgue un procédé de préparation d'une composition de caoutchouc comprenant une résine polyoléfinique micro-dispersée dans un caoutchouc oléfinique, par mélangeage des ingrédients à une température inférieure au point de fusion de la résine polyoléfinique. Ces ingrédients ainsi mélangés comprennent au moins 20 pce de noir de carbone à titre de charge renforçante, en plus du caoutchouc et de la résine, et le mélange obtenu est réticulé par un système au soufre ou au peroxyde.

EP 3 243 874 A1 divulgue une composition de caoutchouc pour pneumatique prévue pour présenter une résistance à l'ozone améliorée, comprenant une matrice d'un polymère apolaire issu d'un diène conjugué (caoutchouc insaturé, tel qu'un polybutadiène), dans laquelle matrice sont dispersés des domaines d'un polymère oléfinique de sorte que l'interface entre la matrice et ces domaines comporte des liaisons covalentes. Ce document enseigne d'utiliser un système de réticulation au peroxyde pour réticuler le caoutchouc insaturé et des domaines saturés (e.g. constitués d'un copolymère éthylène-propylène), et un système de réticulation au soufre pour co-réticuler ce caoutchouc insaturé et des domaines également insaturés (e.g. constitués d'un terpolymère éthylène-propylène-diène (EPDM)).

Au cours de ses recherches récentes, la Demanderesse a cherché de manière intensive à modifier les procédés de mélangeage de ces compositions connues incorporant des domaines thermoplastiques discrets dans la matrice de caoutchouc, de sorte que ces compositions présentent un renforcement analogue à celui procuré par les charges renforçantes usuelles de type noir de carbone ou silice, sans pénaliser et même en améliorant leurs propriétés mécaniques.

### Exposé de l'invention

Un but de la présente invention est de proposer une composition de caoutchouc qui remédie non seulement à l'inconvénient précité d'hystérèse élevée des compositions chargées au noir de carbone ou à la silice, mais qui présente en outre des propriétés de renforcement sensiblement conservées et des propriétés mécaniques améliorées par rapport à celles d'une composition témoin à base de la même matrice élastomère et du même système de réticulation mais chargée au noir de carbone.

Ce but est atteint en ce que la Demanderesse vient de découvrir d'une manière surprenante que si l'on met en oeuvre une réaction en voie fondue par travail thermomécanique d'un mélange réactionnel comprenant un élastomère et un polymère thermoplastique de température de fusion Tf, avec un échauffement du mélange réactionnel jusqu'à une température maximale Ta de mélangeage supérieure à Tf et maintenue pendant une durée suffisante, alors on obtient un mélange qui, après ajout d'un système de réticulation spécifique eu égard à l'élastomère choisi et éventuellement au polymère thermoplastique, donne une composition réticulable dans laquelle le polymère thermoplastique est dispersé de manière homogène dans l'élastomère sous forme de nodules avantageusement sphériques ou ellipsoïdaux de taille nanométrique ou micrométrique, ce qui permet notamment d'obtenir pour la composition réticulable une résistance au grillage améliorée et pour la composition réticulée un renforcement du même ordre et des propriétés mécaniques améliorées même après un vieillissement thermo-oxydant ou par rayonnements UV, en comparaison d'une composition témoin à base des mêmes ingrédients (e.g. même élastomère, même système de réticulation) sauf le noir de carbone qu'elle contient à la place dudit polymère thermoplastique.

Plus précisément, une composition de caoutchouc réticulable selon l'invention est à base d'au moins un élastomère, la composition comprenant d'autres ingrédients qui comprennent un système de réticulation et une phase polymérique thermoplastique qui présente au moins une température de fusion Tf et qui est dispersée dans ledit au moins un élastomère sous forme de nodules, la composition réticulable comprenant le produit :
a) d'une réaction en voie fondue par travail thermomécanique d'un mélange réactionnel comprenant ledit au moins un élastomère et lesdits autres ingrédients à l'exception du système de réticulation pour l'obtention d'un mélange précurseur de la composition réticulable, puis
b) d'un travail mécanique dudit mélange précurseur avec ajout préalable du système de réticulation pour l'obtention de la composition réticulable.

Selon l'invention :
- les nodules, e.g. sphériques ou ellipsoïdaux, présentent une plus grande dimension transversale (e.g. diamètre ou grand axe, respectivement) moyenne en poids comprise entre 10 nm et 10 µm, de préférence entre 50 nm et 10 µm,
- ladite réaction comprend un échauffement du mélange réactionnel jusqu'à une température maximale Ta de mélangeage qui est supérieure à ladite au moins une température de fusion Tf la plus élevée de la phase polymérique thermoplastique et qui est maintenue pendant une durée de maintien déterminée, et
- le système de réticulation comprend du soufre lorsque ledit au moins un élastomère est insaturé et ladite phase polymérique thermoplastique comprend des chaînes polymériques saturées, et comprend un peroxyde lorsque ledit au moins un élastomère est saturé.

Par l'expression « à base de », on entend dans la présente description que la composition ou l'ingrédient considéré comprend majoritairement en poids le constituant concerné, i.e. selon une fraction massique supérieure à 50 %, de préférence supérieure à 75 % et pouvant aller jusqu'à 100 %.

Par « insaturé » et « saturé », on entend de manière connue dans la présente description un élastomère / polymère thermoplastique qui comporte au moins une insaturation (i.e. double ou triple liaison) et qui est dépourvu d'insaturation (i.e. sans double ou triple liaison), respectivement.

On notera qu'une composition réticulable selon l'invention permet ainsi de manière inattendue, par ce produit de réaction en voie fondue obtenu avec ledit échauffement maintenu à une température élevée (en comparaison du mélangeage de ladite composition témoin à base des mêmes ingrédients, à l'exception de la phase thermoplastique remplacée par du noir de carbone), combiné à la sélection d'un système de réticulation adapté à l'élastomère et à la phase thermoplastique, d'obtenir une dispersion de ce dernier sous forme desdits nodules dans l'élastomère avec une interface optimisée entre la matrice élastomère et les nodules thermoplastiques, conférant des propriétés améliorées ou au moins conservées tant à la composition réticulable (notamment la résistance au grillage) qu'à la composition réticulée (notamment les propriétés mécaniques sous contraintes statiques et dynamiques et de renforcement).

On notera également qu'une composition de caoutchouc selon l'invention n'est pas à confondre avec une composition élastomère thermoplastique, cette composition de l'invention étant en effet caractérisée par une dispersion de ladite phase polymérique thermoplastique dans ledit au moins un élastomère et étant donc structurellement très différente d'un vulcanisat thermoplastique, dans lequel la base thermoplastique contient une dispersion de nodules de caoutchouc.

On notera en outre que la composition réticulable selon l'invention permet notamment, suite à sa réticulation, de conférer à la composition réticulée :
- une densité réduite de manière significative par rapport à celle de ladite composition témoin renforcée par du noir de carbone en lieu et place des nodules de ladite phase thermoplastique,
- des propriétés statiques au moins conservées ou améliorées en comparaison de celles de la composition témoin et quasiment pas pénalisées suite à un vieillissement thermo-oxydant ou par rayonnements UV, et
- une conductivité minimisée en comparaison de cette composition témoin.

Selon l'invention, ladite plus grande dimension transversale moyenne en poids des nodules de la phase polymérique thermoplastique est mesurée notamment par microscopie électronique à balayage (MEB) couplée à un détecteur de photons X (MEB/EDX), avec métallisation Or/Palladium.

Avantageusement selon l'invention, les nodules peuvent présenter une plus grande dimension transversale moyenne en poids comprise entre 100 nm et 10 µm, et la durée de maintien de ladite température maximale Ta de mélangeage est d'au moins 10 secondes.

Selon une autre caractéristique de l'invention, la composition réticulable peut comprendre, à titre de charge en poudre dispersée dans ledit au moins un élastomère, de 0 à 100 pce (de préférence de 0 à 50 pce et encore plus préférentiellement de 0 à 10 pce, voire de 0 à 5 pce) d'une charge organique telle que du noir de carbone et de 0 à 70 pce (par exemple de 10 à 60 pce) d'une charge inorganique non renforçante autre qu'une silice (pce : parties en poids pour 100 parties d'élastomère(s)), et avantageusement la composition réticulable peut être totalement dépourvue de charge en poudre organique ou inorganique.

Par « charge », on entend dans la présente description une ou plusieurs charge(s) individuelle(s) de grade(s) renforçant(s) ou non pour l'élastomère concerné qui est/ sont dispersée(s) de manière homogène sous forme de poudre dans la composition (contrairement aux nodules de la présente invention), et par « charge inorganique » on entend une charge claire (parfois appelée « charge blanche »), par opposition aux charges organiques telles que les noirs de carbone et le graphite, par exemple.

On notera qu'une composition selon l'invention est ainsi dépourvue de noir de carbone ou bien en contient au plus 100 pce (de préférence au plus 50 pce, voire au plus 10 pce ou même au plus 5 pce), et que cette composition de l'invention peut être dépourvue de silice et peut optionnellement comprendre au plus 70 pce d'une charge inorganique non renforçante, telle que de la craie ou un aluminosilicate tel que le kaolin, à titre non limitatif.

Egalement avantageusement, la composition réticulable peut présenter une résistance au grillage mesurée selon la norme ISO 289-2 par des temps t5 et t35 sans réticulation prématurée de la composition qui sont tous deux supérieurs à 17 min. et encore plus avantageusement supérieurs à 20 min., t5 et t35 étant relatifs à des incréments de viscosité Mooney ML(1+4) à 125° C par rapport à la viscosité Mooney initiale respectivement de +5 et +35 points.

On notera que ces temps t5 et t35 sont nettement supérieurs à ceux de ladite composition témoin chargée au noir de carbone.

Selon un mode de réalisation de l'invention, le système de réticulation comprend du soufre et optionnellement en outre un peroxyde, ledit au moins un élastomère étant un caoutchouc choisi parmi :
- les caoutchoucs oléfiniques fonctionnalisés ou non, tels que les copolymères éthylène-alpha oléfine(s) comme par exemple les copolymères éthylène-propylène (EPM) et les terpolymères éthylène-propylène-diène (EPDM), et
- les caoutchoucs diéniques fonctionnalisés ou non issus au moins en partie de monomères diènes conjugués, tels que le caoutchouc naturel (NR), les homopolymères et copolymères de l'isoprène et les homopolymères et copolymères du butadiène, et
ladite phase polymérique thermoplastique comprend au moins un polymère saturé de préférence choisi parmi les polyoléfines aliphatiques ou aromatiques fonctionnalisées ou non, comme par exemple des homopolymères ou copolymères d'éthylène ou de propylène.

On notera que ce système de réticulation au soufre comprend de manière connue, en plus du soufre, tout ou partie des accélérateurs et activateurs de vulcanisation usuels.

A titre de copolymères éthylène-alpha oléfine(s) pour les caoutchoucs oléfiniques, on peut citer d'une manière générale ceux issus de l'éthylène et d'une alpha-oléfine ayant de 3 à 20 atomes de carbone et de préférence de 3 à 12 atomes de carbone, telle que le propylène, butène-1, pentène-1, hexène-1, 4-méthylpentène-1, heptène-1, octène-1, nonène-1, décène-1, undécène-1 et dodécène-1. Les alpha-oléfines choisies parmi le propylène, butène-1, hexène-1, 4-methylpentène-1 et octène-1 sont préférées.

A titre de copolymères de l'isoprène et du butadiène pour les caoutchoucs diéniques, on peut par exemple citer les copolymères isoprène-butadiène (BIR), les copolymères d'isoprène et/ou de butadiène avec un comonomère vinylaromatique tel que le styrène (SIR, SBR, SBIR).

Selon un exemple de ce mode de réalisation de l'invention, ledit au moins un élastomère est un EPDM dont le taux massique d'unités issues de l'éthylène est compris entre 15 % et 80 % et ladite phase polymérique thermoplastique comprend au moins une dite polyoléfine aliphatique choisie parmi les homopolymères d'éthylène, les homopolymères de propylène et les terpolymères polypropylène-éthylène-diène ayant un taux massique d'unités issues de l'éthylène compris entre 1 % et 15 %.

On notera que l'EPDM utilisable à titre d'élastomère dans la composition de l'invention peut ainsi présenter un taux massique d'unités issues de l'éthylène relativement élevé compris entre 60 et 80 %, ou à l'opposé compris entre 15 et 20 %. Quant à la polyoléfine aliphatique formant la phase thermoplastique de l'invention, il peut s'agir d'un « PEDM » issu majoritairement du polypropylène, selon un taux massique d'au moins 80 % (avec par exemple entre 5 et 15 % d'éthylène et entre 2,5 et 5 % de diène).

Selon un autre mode de réalisation de l'invention, le système de réticulation comprend un peroxyde et optionnellement en outre du soufre, ledit au moins un élastomère étant saturé et ladite phase polymérique thermoplastique comprenant des chaînes polymériques saturées ou insaturée, et de préférence ledit au moins un élastomère est un caoutchouc silicone par exemple choisi parmi les polydiméthylsiloxanes (PDMS), et ladite phase polymérique thermoplastique comprend au moins un polymère saturé par exemple choisi parmi les résines phényl silicone ou alkyl silicone.

On notera que ce système de réticulation au peroxyde peut avantageusement comprendre un peroxyde organique à titre d'agent réticulant et un coagent de réticulation comprenant par exemple du triallyl cyanurate (TAC) ou du triallyl isocyanurate (TAlC).

A titre de caoutchouc silicone, on peut utiliser de manière générale tout polyorganosiloxane, et à titre de polymère saturé toute résine silicone thermoplastique par exemple de type alkyl (e.g. méthyl) silicone ou phényl silicone.

D'une manière générale, la composition réticulable de l'invention peut comprendre ladite phase polymérique thermoplastique selon une quantité comprise entre 1 et 150 pce (pce : parties en poids pour 100 parties d'élastomère(s)) et de préférence comprise entre 5 et 70 pce (encore plus préférentiellement entre 15 et 50 pce), et lesdits nodules formés par ladite phase polymérique thermoplastique présentent ladite plus grande dimension transversale moyenne en poids comprise entre 150 nm et 3 µm, de préférence entre 300 nm et 2 µm.

Selon un autre aspect général de l'invention, lesdits nodules peuvent avantageusement être sphériques ou ellipsoïdaux, par exemple.

Une composition de caoutchouc réticulée selon l'invention est le produit d'une réticulation thermique de la composition réticulable telle que définie ci-dessus par réaction chimique avec ledit système de réticulation.

On notera que cette réticulation de la composition réticulable peut être obtenue via une mise en température par exemple comprise entre 140 et 220° C, de préférence entre 160 et 200° C.

Selon une autre caractéristique de l'invention, la composition réticulée peut comprendre, à titre de charge en poudre dispersée dans ledit au moins un élastomère, de 0 à 100 pce (de préférence de 0 à 50 pce et encore plus préférentiellement de 0 à 10 pce, voire de 0 à 5 pce) d'une charge organique telle que du noir de carbone et de 0 à 70 pce (par exemple de 10 à 60 pce) d'une charge inorganique autre qu'une silice (telle que de la craie ou un aluminosilicate comme par exemple le kaolin), et de préférence la composition réticulée est totalement dépourvue de ladite charge en poudre organique ou inorganique.

Avantageusement, la composition réticulée peut présenter :
- une densité inférieure à 1,10, encore plus avantageusement inférieure ou égale à 1, et/ou
- une résistivité transversale, mesurée selon la norme IEC 62631 3-1, supérieure à 10¹⁰ Ω.cm et encore plus avantageusement supérieure à 10¹⁴ Ω.cm.

On notera que la densité d'une composition réticulée selon l'invention, tous modes de réalisation et exemples confondus, est ainsi significativement réduite (avantageusement de plus de 10 %, voire de plus de 15 %) en comparaison d'une composition témoin à base des mêmes ingrédients (e.g. mêmes matrice élastomère et système de réticulation) mais chargée au noir de carbone en remplacement de ladite phase thermoplastique.

On notera également que la résistivité électrique d'une composition réticulée selon l'invention, tous modes de réalisation et exemples confondus, est ainsi très nettement augmentée en comparaison de cette composition témoin chargée au noir de carbone.

Egalement avantageusement, la composition réticulée selon l'invention (tous modes de réalisation et exemples confondus) peut présenter une dureté Shore A mesurée selon la norme ASTM D2240 et un rapport G' 0,5% / G' 20% de modules de conservation G' relatifs aux modules de cisaillement complexes G* vérifiant l'une au moins des conditions suivantes (i) et (ii) à 100° C:
(i) G' 0,5% / G' 20% ≤ 1,50 si la dureté Shore A est de 40 à 50, ≤ 1,80 si la dureté Shore A est de 51 à 60, et ≤ 2,00 si la dureté Shore A est de 51 à 60,
(ii) tan delta à 0,5 % de déformation ≤ 0,080, de préférence ≤ 0,050 , G' 0,5% et G' 20% étant mesurés à des amplitudes de déformations dynamiques respectives de 0,5 % et 20 % sur des éprouvettes de double cisaillement réticulées à 177° C et soumises à un balayage en déformations de cisaillement de 0,5 % à 60 % à une même fréquence de 1,7 Hz et à une même température de 100° C, et tan delta représentant le facteur de perte mesuré lors dudit balayage en déformations.

On notera que ces conditions témoignent d'un effet Payne et de pertes hystérétiques significativement réduits pour une composition réticulée de l'invention, en comparaison de la composition témoin correspondante à base des mêmes ingrédients (e.g. mêmes matrice élastomère et système de réticulation) mais chargée au noir de carbone en remplacement de la phase thermoplastique.

Selon un mode de réalisation de l'invention présenté ci-dessus où ledit au moins un élastomère comprend ledit caoutchouc oléfinique tel qu'un EPM ou EPDM et ladite phase polymérique thermoplastique comprend ladite au moins une polyoléfine aliphatique, la composition réticulée peut présenter une dureté Shore A mesurée selon la norme ASTM D2240 et un rapport G' 30Hz / G' 0,3Hz de modules de conservation G' relatifs aux modules de cisaillement complexes G* et un facteur de perte tan delta vérifiant l'une au moins des conditions suivantes (i) et (ii) à 100° C:
(i) G' 30Hz / G' 0,3Hz ≤ 1,20 si la dureté Shore A est de 51 à 60 et ≤ 1,10 si la dureté Shore A est de 61 à 70,
(ii) tan delta à 3 Hz ≤ 0,80 si la dureté Shore A est de 51 à 60 et ≤ 0,10 si la dureté Shore A est de 61 à 70,
G' 30Hz et G' 0,3Hz étant mesurés à une amplitude de déformation dynamique de 0,5 % sur des éprouvettes de double cisaillement réticulées à 177° C et soumises à un balayage en fréquences de 0,100 Hz à 30 000 Hz à une même température de 100° C, et tan delta étant mesurée à 3 Hz lors dudit balayage en fréquences.

Conformément à des modes de réalisation de l'invention où ledit au moins un élastomère comprend ledit caoutchouc oléfinique tel qu'un EPM ou EPDM ou un caoutchouc diénique issu au moins en partie d'un monomère diène conjugué tel que du caoutchouc naturel, et où ladite phase polymérique thermoplastique comprend ladite au moins une polyoléfine aliphatique, la composition réticulée peut présenter une dureté Shore A mesurée selon la norme ASTM D2240 et un rapport de modules M 155Hz / M 15Hz et un facteur de perte tan D à 15 Hz qui sont mesurés à 23° C via un balayage en fréquences selon la norme ISO 4664 par un visco-analyseur Metravib^{®} sur des éprouvettes Metravib^{®} de type plots et qui vérifient l'une au moins des conditions suivantes (i) et (ii) :
(i) M 155Hz / M 15Hz ≤ 1,50 si la dureté Shore A est de 40 à 50 et ≤ 2,00 si la dureté Shore A est de 61 à 70,
(ii) tan D à 15 Hz ≤ 0,10 si la dureté Shore A est de 40 à 50, ≤ 0,15 si la dureté Shore A est de 51 à 60, et ≤ 0,20 si la dureté Shore A est de 61 à 70.

Egalement conformément à ce mode de réalisation de l'invention où ledit au moins un élastomère comprend ledit caoutchouc oléfinique tel qu'un EPM ou EPDM et ladite phase polymérique thermoplastique comprend ladite au moins une polyoléfine aliphatique, la composition réticulée peut satisfaire à l'une au moins des conditions (i) à (iii) ci-après :
(i) un allongement à la rupture, mesuré en traction uni-axiale selon la norme ASTM D 412, supérieur à 250 % et de préférence supérieur à 400 % ;
(ii) une contrainte à la rupture, mesurée en traction uni-axiale selon la norme ASTM D 412, supérieure à 4 MPa et de préférence supérieure à 12 MPa ; et
(iii) une dureté Shore A mesurée après 3 secondes selon la norme ASTM D2240 qui est supérieure à 40 et de préférence égale ou supérieure à 60.

On notera que ces conditions témoignent de propriétés mécaniques statiques et de renforcement au moins conservées, voire améliorées par rapport à la composition témoin correspondante à base des mêmes ingrédients (e.g. mêmes matrice élastomère et système de réticulation) mais chargée au noir de carbone en remplacement de ladite polyoléfine aliphatique.

On notera également que la Demanderesse a vérifié que ces propriétés statiques et de renforcement sont avantageusement quasiment pas pénalisées suite à un vieillissement thermo-oxydant (i.e. sous air chaud), ni suite à un vieillissement par exposition à des rayonnements UV.

Selon un autre mode de réalisation de l'invention présenté ci-dessus où ledit au moins un élastomère comprend ledit caoutchouc silicone de préférence choisi parmi les polydiméthylsiloxanes (PDMS) et ladite phase polymérique thermoplastique comprend ledit au moins un polymère saturé de préférence choisi parmi les résines phényl ou alkyl silicone, la composition réticulée peut être totalement dépourvue de ladite charge en poudre telle que de la silice.

D'une manière surprenante, on notera que cette absence de silice dans une telle composition de caoutchouc à base d'un caoutchouc silicone (qui contient usuellement de la silice à titre de charge renforçante), le niveau de renforcement élevée obtenu grâce à la dispersion des nodules de résine phényl ou alkyl silicone ne se traduit pas par des non-linéarités mécaniques observées sous contraintes dynamiques, ce qui se traduit avantageusement par un effet Payne également réduit pour ce mode de réalisation en comparaison de la composition témoin à base des mêmes ingrédients (e.g. mêmes matrice élastomère et système de réticulation) mais chargée au noir de carbone en remplacement de cette résine.

Egalement conformément au mode précité de réalisation de l'invention où ledit au moins un élastomère comprend ledit caoutchouc diénique issu au moins en partie d'un monomère diène conjugué, tel que du caoutchouc naturel, et ladite phase polymérique thermoplastique comprend ladite au moins une polyoléfine aliphatique, la composition réticulée peut satisfaire à l'une au moins des conditions (i) à (iii) ci-après :
(i) l'un au moins des modules sécants M100, M200 et M300 suivants respectivement à 100 %, 200 % et 300 % de déformation, mesurés en traction uni-axiale selon la norme ASTM D 412 :
   M100 supérieur à 3 MPa, de préférence égal ou supérieur à 5 MPa,
   M200 supérieur à 6 MPa, de préférence égal ou supérieur à 8 MPa,
   M300 supérieur à 11 MPa, de préférence égal ou supérieur à 13 MPa;
(ii) une contrainte à la rupture, mesurée en traction uni-axiale selon la norme ASTM D 412, supérieure à 13 MPa et de préférence supérieure à 18 MPa ; et
(iii) une dureté Shore A mesurée après 3 secondes selon la norme ASTM D2240 qui est supérieure à 45 et de préférence égale ou supérieure à 60.

On notera que ces conditions témoignent de propriétés mécaniques statiques et de renforcement au moins conservées, voire améliorées par rapport à la composition témoin correspondante à base des mêmes ingrédients (e.g. mêmes matrice élastomère et système de réticulation) mais chargée au noir de carbone en remplacement de ladite polyoléfine aliphatique.

On notera également que la Demanderesse a vérifié que ces propriétés statiques et de renforcement sont avantageusement quasiment pas pénalisées suite à un vieillissement thermo-oxydant (i.e. sous air chaud), ni suite à un vieillissement par exposition à des rayonnements UV.

Un organe mécanique à fonction dynamique selon l'invention est en particulier choisi parmi des supports antivibratoires et des articulations élastiques pour véhicules à moteur ou dispositifs industriels, ledit organe comprenant au moins une partie élastique qui est constituée d'une composition de caoutchouc réticulée et qui est adaptée pour être soumise à des sollicitations dynamiques, et selon l'invention ladite composition réticulée est telle que définie ci-dessus.

Un élément d'étanchéité selon l'invention est en particulier choisi parmi les joints d'étanchéité pour carrosserie de véhicule et les profilés d'étanchéité pour bâtiment, ledit élément d'étanchéité comprenant une partie élastique qui est constituée d'une composition de caoutchouc réticulée, et selon l'invention la composition de caoutchouc réticulée est telle que définie ci-dessus.

On notera que dans ce cas, par exemple dans un joint assurant l'étanchéité d'une carrosserie de véhicule automobile, il est possible d'incorporer à la composition de l'invention au plus 100 pce de noir de carbone et entre 10 et 60 pce d'une charge inorganique autre que la silice, par exemple de la craie ou un aluminosilicate tel que le kaolin, combiné(e) à un oxyde métallique tel qu'un oxyde de calcium.

Un procédé de préparation selon l'invention d'une composition réticulable telle que définie ci-dessus comprend les étapes suivantes :
a) Introduction dans un mélangeur interne par exemple tangentiel ou engrenant (i.e. à rotors engrenants), ou dans une extrudeuse à vis par exemple bi-vis, dudit au moins un élastomère puis desdits autres ingrédients à l'exception dudit système de réticulation ;
b) Travail thermomécanique dans ledit mélangeur interne ou dans ladite extrudeuse à vis, comprenant un mélangeage par voie fondue dudit mélange réactionnel à l'exception du système de réticulation pour l'obtention d'un mélange précurseur de la composition réticulable, l'étape b) comprenant
   b1) un échauffement dudit mélange réactionnel jusqu'à ladite température maximale Ta de mélangeage qui est supérieure à ladite au moins une température de fusion Tf la plus élevée de ladite phase polymérique thermoplastique, de préférence d'un écart Ta-Tf compris entre 1 et 50° C ; et
   b2) une stabilisation dudit échauffement par maintien de ladite température maximale Ta de mélangeage pendant ladite durée de maintien d'au moins 10 secondes, ladite durée de maintien étant de préférence comprise entre 20 secondes et 10 min.;
c) Extraction du mélange hors dudit mélangeur interne ou de ladite extrudeuse à vis, et optionnellement refroidissement ; puis
d) Travail mécanique dudit mélange précurseur par exemple à une température comprise entre 20 et 50° C avec ajout préalable dudit système de réticulation comprenant du soufre et/ou un peroxyde pour l'obtention de la composition réticulable.

De préférence, l'écart Ta-Tf est compris entre 5 et 30° C, encore plus préférentiellement entre 10 et 20° C.

On notera que la valeur choisie pour Ta dépend ainsi de celle de Tf qui caractérise la phase polymérique thermoplastique utilisée, et que dans le cas où cette dernière est à base d'une polyoléfine aliphatique telle qu'un polypropylène, Ta peut par exemple être comprise entre 160 et 220° C, de préférence entre 170 et 200° C, alors que dans le cas où cette phase thermoplastique est une résine alkyl ou phényl silicone, Ta peut être par exemple comprise entre 70 et 150° C, de préférence entre 80 et 120° C.

Egalement à titre préférentiel, Ta est maintenue pendant une durée comprise entre 30 secondes et 8 min., encore plus préférentiellement entre 1 min. et 5 min.

Avantageusement, l'on peut réaliser l'échauffement de l'étape b) par l'utilisation :
- dans ledit mélangeur interne :
   d'un taux de cisaillement dudit mélange réactionnel dans le mélangeur interne d'au moins 80 s⁻¹, de préférence d'au moins 150 s⁻¹, par exemple mis en oeuvre à une vitesse de rotation de pales de rotor dans le mélangeur interne comprise entre 10 et 200 tours/min. et de préférence entre 50 et 120 tours/min., et/ou
   d'une double paroi dans le mélangeur interne recevant un fluide caloporteur, et/ou en utilisant un taux de remplissage du mélangeur interne supérieur à 100 % ; ou
- dans ladite extrudeuse à vis, d'éléments chauffants qui équipent l'extrudeuse.

On notera qu'un tel taux de cisaillement (par exemple compris entre 100 et 200 s⁻¹) est utilisable dans un mélangeur interne tangentiel (e.g. de type Banbury) ou engrenant (de type Haake).

On notera également qu'une vitesse de rotation de 200 tours/min. est en particulier utilisable pour un mélangeur Haake, alors qu'une vitesse de rotation de l'ordre de 100 tours/min. est plutôt utilisable pour un mélangeur Shaw 3.6L.

On notera en outre que la mise en oeuvre des étapes a) et b) dans une extrudeuse à vis, e.g. une extrudeuse bi-vis « ZSE 27 MAXX » fabriquée par LEISTRITZ, peut être telle que l'on atteint une température maximale Ta de mélangeage d'au moins 200° C lors de l'échauffement d'un mélange à base d'un EPDM et d'une polyoléfine aliphatique (e.g. un polypropylène), via des éléments électriques chauffants dont est pourvue l'extrudeuse, et que l'on maintient cette température Ta pendant une durée par exemple supérieure à 30 secondes.

### Brève description des dessins

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :
**Fig. 1**

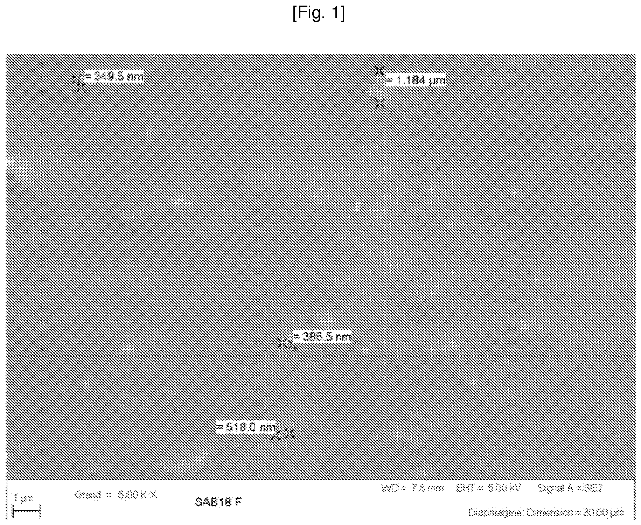

   [Fig. 1] est un cliché au microscope électronique à balayage (MEB ci-après) d'une composition réticulée I1 selon l'invention à base d'une matrice élastomère de type EPDM.
**Fig. 2**

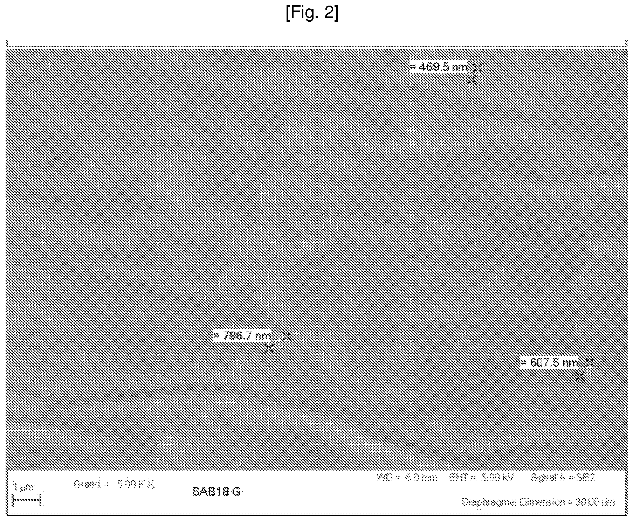

   [Fig. 2] est un cliché au MEB d'une autre composition réticulée I2 selon l'invention à base de la même matrice élastomère de type EPDM.
**Fig. 3**

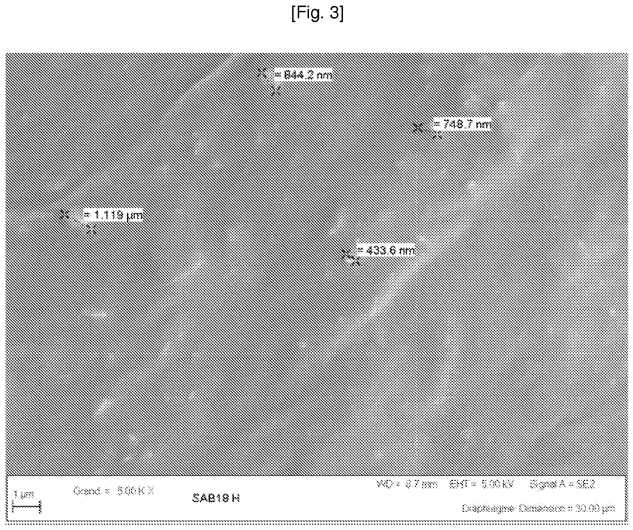

   [Fig. 3] est un cliché au MEB d'une autre composition réticulée I3 selon l'invention à base de la même matrice élastomère de type EPDM.
**Fig. 4**

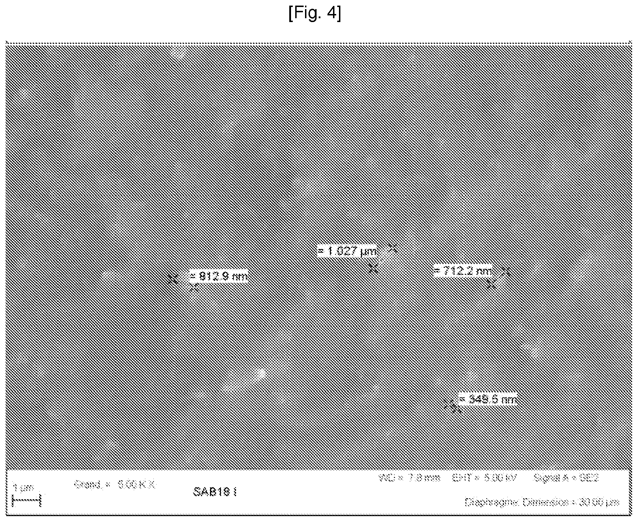

   [Fig. 4] est un cliché au MEB d'une autre composition réticulée I4 selon l'invention à base de la même matrice élastomère de type EPDM.
**Fig. 5**

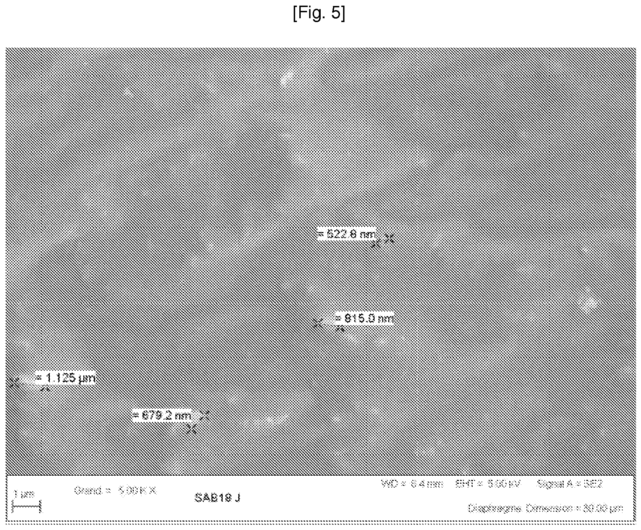

   [Fig. 5] est un cliché au MEB d'une autre composition réticulée I5 selon l'invention à base de la même matrice élastomère de type EPDM.
**Fig. 6**

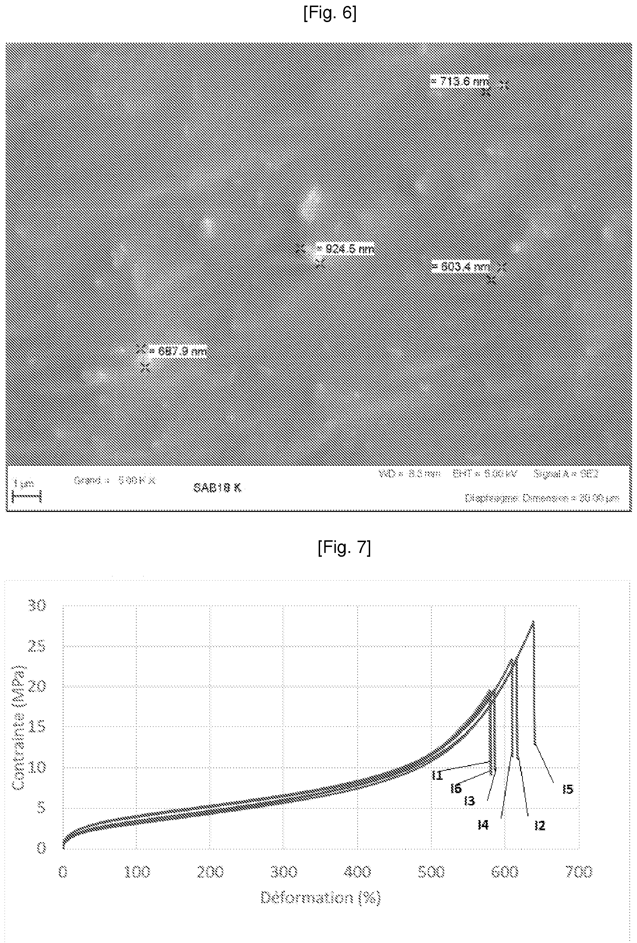

   [Fig. 6] est un cliché au MEB d'une autre composition réticulée I6 selon l'invention à base de la même matrice élastomère de type EPDM.
**Fig. 7**
   [Fig. 7] est un graphique contrainte-déformation des compositions réticulées I1 à I6 selon l'invention.
**Fig. 8**

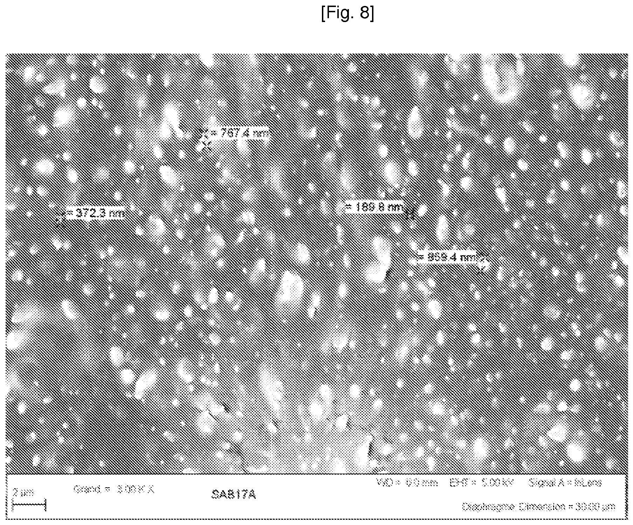

   [Fig. 8] est un cliché au MEB d'une autre composition réticulée I7 selon l'invention à base d'une autre matrice élastomère de type EPDM.
**Fig. 9**

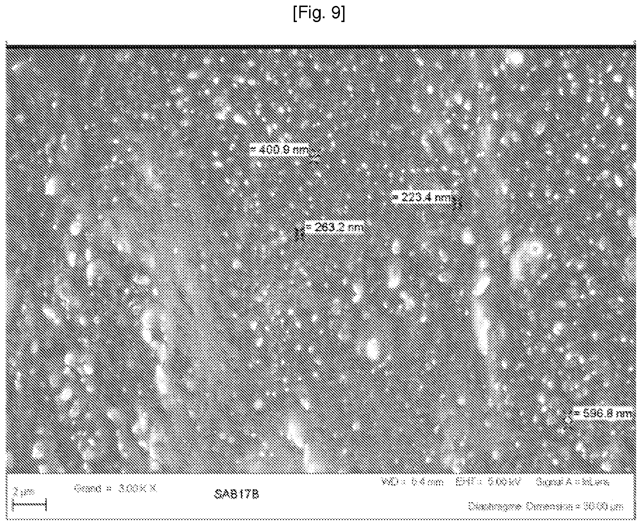

   [Fig. 9] est un cliché au MEB d'une autre composition réticulée I8 selon l'invention à base d'une autre matrice élastomère de type EPDM.
**Fig. 10**

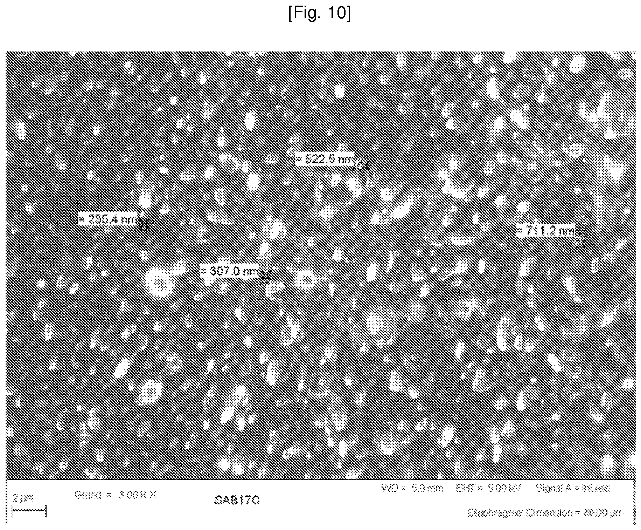

   [Fig. 10] est un cliché au MEB d'une autre composition réticulée I9 selon l'invention à base d'une autre matrice élastomère de type EPDM.
**Fig. 11**

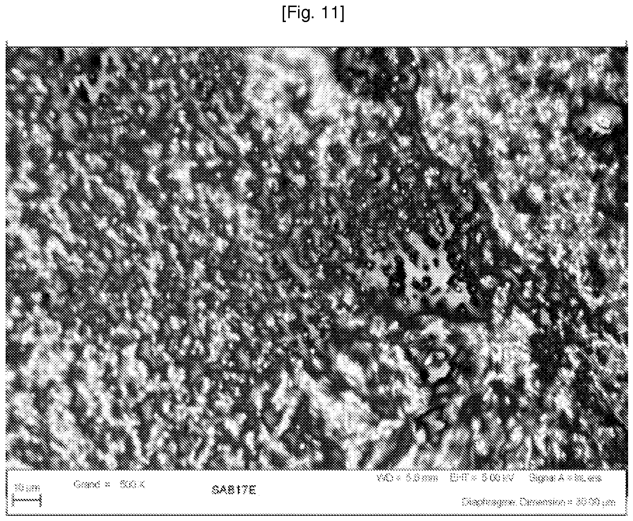

   [Fig. 11] est un cliché au MEB d'une composition réticulée témoin C1 à base d'une autre matrice élastomère de type EPDM.
**Fig. 12**

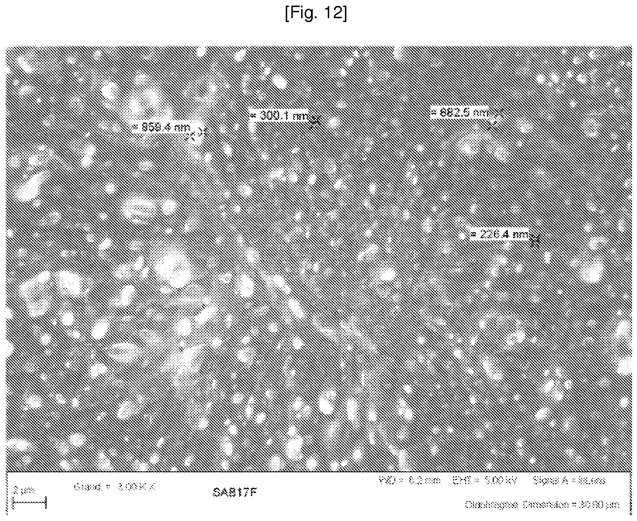

   [Fig. 12] est un cliché au MEB d'une autre composition réticulée I10 selon l'invention à base d'une autre matrice élastomère de type EPDM.
**Fig. 13**

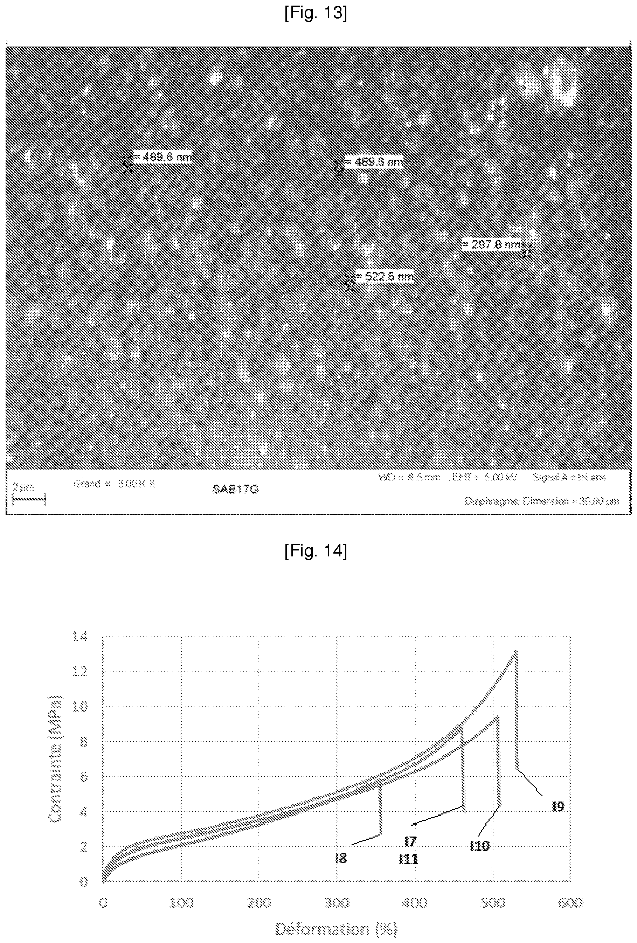

   [Fig. 13] est un cliché au MEB d'une autre composition réticulée I11 selon l'invention à base d'une autre matrice élastomère de type EPDM.
**Fig. 14**
   [Fig. 14] est un graphique contrainte-déformation des compositions réticulées I17 à I11 selon l'invention.
**Fig. 15**

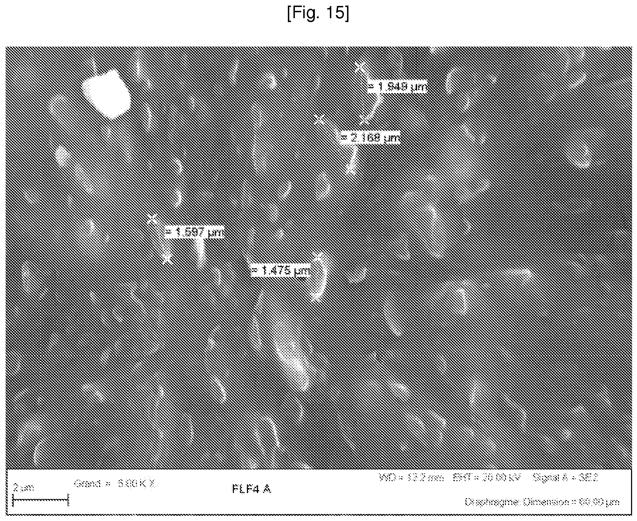

   [Fig. 15] est un cliché au MEB d'une autre composition réticulée I13 selon l'invention à base d'une matrice élastomère de type EPDM.
**Fig. 16**

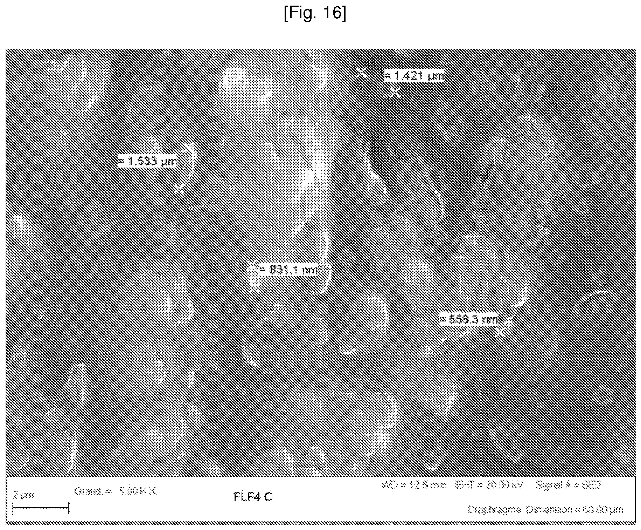

   [Fig. 16] est un cliché au MEB d'une autre composition réticulée I15 selon l'invention à base d'une matrice élastomère de type EPDM.
**Fig. 17**

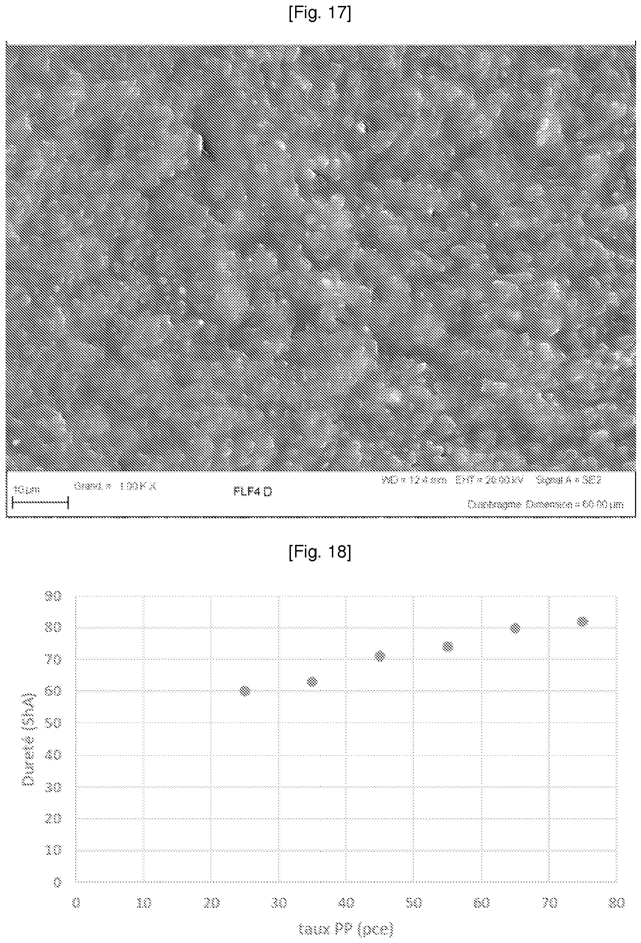

   [Fig. 17] est un cliché au MEB d'une autre composition réticulée selon l'invention I15' à base d'une matrice élastomère de type EPDM.
**Fig. 18**
   [Fig. 18] est un graphique dureté Shore A - taux de polypropylène (PP) pour les compositions réticulées I8, I12, I13, I14, I15, I15' selon l'invention à base d'une matrice élastomère EPDM.
**Fig. 19**

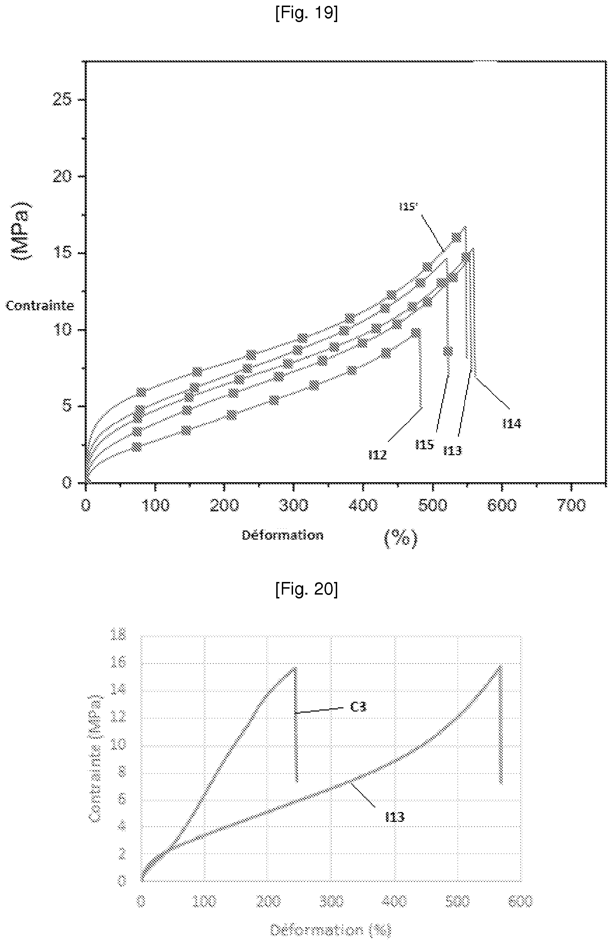

   [Fig. 19] est un graphique contrainte-déformation pour les compositions réticulées I12 à I15' selon l'invention.
**Fig. 20**
   [Fig. 20] est un graphique contrainte-déformation pour la composition réticulée I13 selon l'invention et une autre composition témoin C3 à base d'une matrice élastomère EPDM.
**Fig. 21**

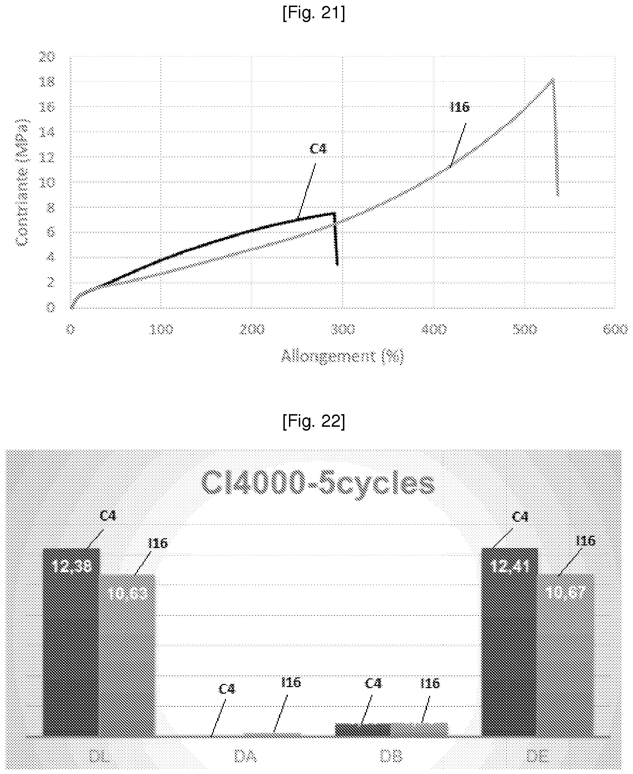

   [Fig. 21] est un graphique contrainte-déformation pour la composition réticulée I16 selon l'invention et une autre composition témoin C4 toutes deux à base d'une matrice élastomère EPDM.
**Fig. 22**
   [Fig. 22] est un graphique à barres montrant les résultats d'un test de tenue aux rayonnements UV pour la composition réticulée I16 selon l'invention et la composition témoin C4.
**Fig. 23**

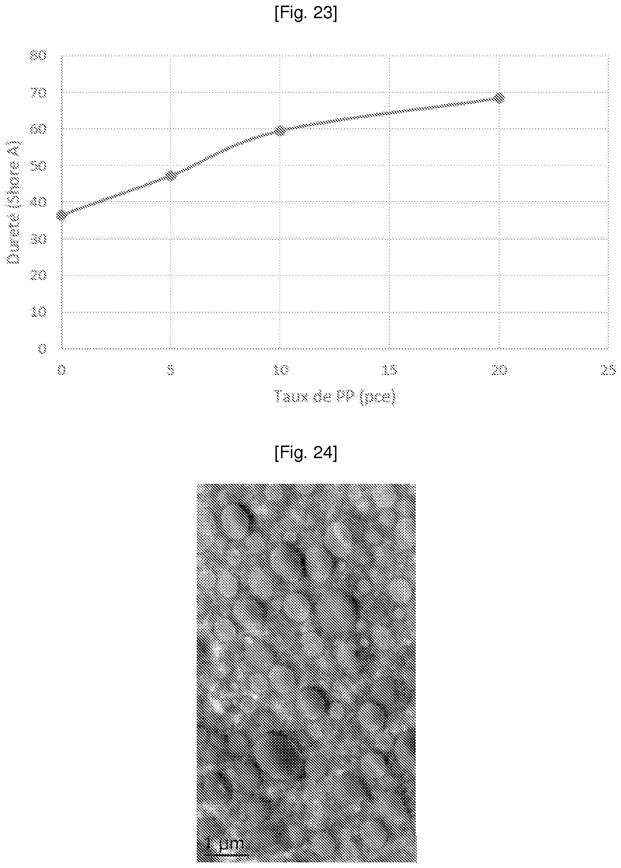

   [Fig. 23] est un graphique dureté Shore A - taux de polypropylène (PP) pour des compositions réticulées I19, I20, I21 selon l'invention et témoin C7 toutes à base d'une matrice élastomère en caoutchouc naturel (NR).
**Fig. 24**
   [Fig. 24] est un cliché au MEB d'une autre composition réticulée I26 selon l'invention à base d'une autre matrice élastomère en caoutchouc silicone.

### Exemples de réalisation de l'invention

Dans les exemples concernés ci-après, on a préparé les compositions réticulables témoin à base d'EPDM chargées au noir de carbone en mettant en oeuvre les étapes successives suivantes sur un mélangeur interne engrenant Polylab Haake^{®}.

### Remplissage :

t = 0 min.
matière : EPDM
vitesse : 50 tours/min.
Trégulation = 40° C.

### Plastification :

tₜₒₜₐₗ = 2 min.
matière : -
vitesse : 50 tours/min.
Trégulation = 40° C.

### Remplissage :

tₜₒₜₐₗ = 4 min.
matière : charge +additifs
vitesse : 50 tours/min.
Trégulation = 40° C.

### Mélangeage :

tₜₒₜₐₗ = 6 min.
matière : -
vitesse : 50 tours/min.
T_{auto-échauffement} = 100° C.

### Sortie du mélange et refroidissement :

T_{mélange sorti} = 85° C
T_{mélange refroidi} = 30° C.

### Accélération sur cylindre :

Jour J.
T = 40° C

### Vulcanisation :

t = 10 min.
T = 177° C.

### Post-cuisson :

t = 4 heures.
T = 175° C.

Dans les exemples concernés ci-après, on a préparé les compositions réticulables selon l'invention à base d'EPDM chargées par des nodules de polypropylène (PP) en mettant en oeuvre les étapes successives suivantes sur un mélangeur interne engrenant Polylab Haake^{®}.

### Remplissage :

t = 0 min.
matière : EPDM
vitesse : 5 tours/min.
Trégulation = 80° C.

### Plastification :

tₜₒₜₐₗ = 2 min.
matière : -
vitesse : 200 tours/min.
Trégulation = 80° C.

### Remplissage :

tₜₒₜₐₗ = 4 min.
matière : PP + huile
vitesse : 5 tours/min.
Trégulation = 80° C.

### Mélangeage :

tₜₒₜₐₗ = 11 min.
matière : -
vitesse : 200 tours/min.
T_{auto-échauffement} = 175° C.

### Stabilisation de la température d'auto-échauffement:

t + 2 min. 30 secondes.
matière : -
T_{matière} = 175° C.
T(° C) : fonction de la vitesse de rotation.

### Sortie du mélange et refroidissement :

T_{mélange sorti} = 160° C
T_{mélange refroidi} = 30° C.

### Accélération sur cylindre :

Jour J.
T = 40° C

### Vulcanisation :

t = t95.
T = 180° C.

On notera que ce procédé selon l'invention, suite à la température de régulation de 80° C, utilise dans l'exemple d'une matrice EPDM et d'une phase dispersée en PP une température d'auto-échauffement de 175° C, maintenue pendant la durée de stabilisation de 2 min. et 30 secondes.

### Normes et protocoles suivis pour les essais sur les compositions réticulables et réticulées obtenues :

### Mesures normées :

MDR (rhéomètre à matrice oscillante) : ISO 6502 : 2016
dureté Shore A : ASTM D 2240
Traction : ASTM D 412
Viscosité Mooney : ISO 289-1
Grillage : ISO 289-2
DRC (déformation rémanente à la compression) : ISO 815 plot B
Déchirement Delft : ISO 34-2
Tenue aux UV : PSA D27 1389/--G (2007)
Résistivité transversale : IEC 62631 3-1.

**MEB** :Microscopie électronique à balayage Zeiss couplée à un détecteur de photons X (MEB/EDX), avec métallisation Or/Palladium. Sur chaque cliché sont mentionnés les réglages du microscope (WD pour « working distance », distance de travail ; EHT pour « Electron High Tension » ; Détecteur Electron Secondaire de Type 2 ES2 ; et la dimension du diaphragme).

### Analyseur RPA de procédé pour caoutchouc (« Rubber Process Analyzer ») :

### Balayage en fréquence

### 1. Réticulation :

- Température : 177° C (+/- 0,5° C)
- Fréquence 0,002 Hz
- Angle : 0,5 Deg

### 2. Balayage en fréquence :

- Température: 100,0° C
- Angle : 0,5 Deg
- Fréquence :0,100 Hz; 0,300 Hz; 1,000 Hz ; 3,000Hz; 10,000Hz; 30,000Hz
- 5 points par conditions.

### Balayage en déformation

### 1. Réticulation

- Température : 177° C (+/- 0,5° C)
- Fréquence : 1,7 Hz
- Angle : 0,5 Deg

### 2. Balayage en déformation :

- Température: 100,0° C
- Fréquence : 1,7 Hz
- Angle : 0,5 %, 0,7 %, 1,0 %, 2,0 %, 4,0 %, 6,0 %, 8,0 %, 10,0 %, 20,0 %, 40,0 %, 60,0 %
- 5 points par conditions.

### Essais « DMA » d'analyse mécanique dynamique (« Dynamic Mechanical Analysis ») :

On a suivi la norme ISO 4664 en utilisant Essais le visco-analyseur Metravib^{®}:
- Conditions : -10 % +/-0,1 % à 155 Hz et -10 % +/- 2 % à 15 Hz
- Eprouvette : Plots de type Metravib^{®}
- Nombre d'éprouvettes: 3 par condition
- Température de mesure : 23° C
- Lubrifiant : huile de silicone en spray.

### Première série d'essais sur compositions à matrices EPDM et phases dispersées PP :

On a utilisé des EPDM de masses molaires variables et de viscosités Mooney variables (ML(1+4) variant par exemple de 20 à 85) avec des taux massiques d'éthylène (C2), de propylène (C3), de diène et d'huile également variables.

Le tableau 1 suivant recense la formulation commune aux compositions I1, I2, I3, I4, I5, I6 de l'invention.

**[Tableau 1]**

| **Ingrédients** | **Densité** | **Compositions I1 à I6** |
|---|---|---|
| Keltan 5470 | 0,86 | 80 |
| Vistalon 3666 | 0,86 | 33 |
| PPH 3060 | 0,90 | 35 |
| SpheronSOA (noir de carbone) | 1,82 | |
| Torilis 7200 | 0,90 | 40 |
| PEG | 1,12 | 1,72 |
| acide stéarique | 0,85 | 0,76 |
| ZnO | 3,70 | 3,10 |
| Accélérateurs de vulcanisation | | 3,08 |
| soufre | | 1,89 |
| | | |
| TOTAL (pce) | | 198,60 |

Le tableau 2 suivant recense des conditions essentielles du procédé de préparation des compositions réticulables qui distinguent les compositions I1 à I6 (température d'auto-échauffement et sa durée de maintien).

**[Tableau 2]**

| | **I1** | **I2** | **I3** | **I4** | **I5** | **I6** |
|---|---|---|---|---|---|---|
| Temps de maintien (min.) | 0,5 | 4,5 | 2,5 | 0,5 | 4,5 | 2,5 |
| Température (° C) d'auto-échauffement | 185 | 185 | 175 | 165 | 165 | 175 |

Quelles que soient les conditions de mélangeage dans ces conditions, les compositions réticulées I1 à I6 présentent toutes une phase PP dispersée de façon homogène dans la matrice EPDM. Les tailles de particules mesurées au MEB sont reprises dans le tableau 3 suivant.

**[Tableau 3]**

| | **Taille des particules** |
|---|---|
| I1 | De 350 nm à 1.2 µm |
| I2 | De 500 à 800 nm |
| I3 | De 400 nm à 1.1 µm |
| I4 | De 350 nm à 1.0 µm |
| I5 | De 500 nm à 1.1 µm |
| I6 | De 600 nm à 950 nm |

Les morphologies des compositions réticulées I1 à I6 visibles aux figures 1-6 et les interactions charges-matrice permettent d'obtenir un très bon renforcement, comme le montrent les essais de traction suivant la norme ASTM D412 portant sur les compositions réticulées I1 à I6 dont les résultats sont visibles à la figure 7.

Le tableau 4 ci-après détaille la formulation commune aux compositions I7, I8, I9, I10, I11 selon l'invention et à la composition témoin C1.

**[Tableau 4]**

| **ingrédients** | **Densité** | **compositions I7-I11 et C1** |
|---|---|---|
| EPDM (variable) | 0,86 | 100 |
| PPH 3060 | 0,90 | 25 |
| Torilis 7200 | 0,90 | 40 |
| PEG | 1,12 | 1,72 |
| acide stéarique | 0,85 | 0,76 |
| ZnO | 3,70 | 3,10 |
| Accélérateurs | | 3,08 |
| soufre | | 1,89 |
| TOTAL (pce) | | 175,60 |

Le tableau 5 ci-après détaille les EPDM utilisés comme matrices élastomères des compositions I7-I11 et C1.

**[Tableau 5]**

| Compositions | | I7 | I8 | I9 | C1 | I10 | I11 |
|---|---|---|---|---|---|---|---|
| Grade EPDM (Données commerciales) | | NORDEL 4520 | NORDEL IP 4570 | NORDEL 4725P | NORDEL 4820 | Keltan 5470 | NORDEL IP 4785 |
| Viscosité ML(1+4) | MU | 20 | 70 | 25 | 25 | 55 | 85 |
| C2 % | % | 50 | 50 | 70 | 85 | 66 | 68 |
| Tg | °C | -45 | -43 | -37 | -16 | -37 | -41 |

Les morphologies des compositions réticulées I7 à I11 visibles aux figures 8, 9, 10, 12, 13 et de la composition témoin C1 visible à la figure 11 sont commentées dans le tableau 6 ci-après.

**[Tableau 6]**

| **Compositions** | **Commentaires** | **Taille particules PP** |
|---|---|---|
| I7 | Répartition homogène des particules de PP | 150 nm à 900 nm |
| I8 | Répartition homogène des particules de PP | 200 nm à 600 nm |
| I9 | Répartition homogène des particules de PP | 200 nm à 750 nm |
| C1 | Répartition hétérogène | PP peut-être fondu, pas de particules |
| I10 | Répartition homogène des particules de PP | 300 nm à 900 nm |
| I11 | Répartition homogène des particules de PP | 250 nm à 550 nm |

Sauf pour la composition C1 avec un taux d'éthylène très élevé (85 %) dans l'EPDM, on obtient la morphologie désirée pour les nodules dispersés.

On n'est pas parvenu à accélérer la composition C1 sur cylindres, étant précisé que ce taux très élevé d'éthylène dans l'EPDM de la composition C1 semble induire une morphologie bi-continue. Le caractère élastomère est perdu dans la composition C1.

Dans le cas des morphologies modulaires obtenues pour les compositions I7 à I11 de l'invention, on a ajouté le système de réticulation sur mélangeur à cylindres puis on a réticulé ces compositions I7-I11. Comme visible à la figure 14, ces compositions I7-I11 présentent de bonnes propriétés mécaniques, notamment un renforcement adapté pour une application industrielle.

Le tableau 7 ci-après détaille les propriétés obtenues pour ces compositions réticulées I7 à I11 selon l'invention.

**[Tableau 7]**

| **Compositions** | | **I7** | **I8** | **I9** | **C1** | **I10** | **I11** |
|---|---|---|---|---|---|---|---|
| **Propriétés à l'état ini**tial | | | | | | | |
| Dureté Shore A | (Point) | 55 | 60 | 68 | | 63 | 62 |
| Module 25% | (MPa) | 1,2 | 1,3 | 1,9 | | 1,5 | 1,5 |
| Module 50% | (MPa) | 1,7 | 1,7 | 2,4 | | 2,0 | 2,0 |
| Module 100% | (MPa) | 2,3 | 2,4 | 3,0 | | 2,6 | 2,6 |
| Module 300% | (MPa) | 4,9 | 4,8 | 5,3 | | 4,7 | 5,0 |
| M300/M100 | | 2,1 | 2,0 | 1,8 | | 1,8 | 1,9 |
| Contrainte rupture | (MPa) | 5,1 | 4,9 | 12,7 | | 8,9 | 7,8 |
| Allongement rupture | (%) | 313 | 294 | 517 | | 489 | 425 |
| Déchirement DELFT | N | 20,0 | 24,0 | 31,0 | | 27,0 | 27,0 |

| **Vieillissement AIR 168 h à 70° C** | | | | | | | |
|---|---|---|---|---|---|---|---|
| Dureté Shore A | (Point) | 56 | 60 | 67 | | 63 | 63 |
| Variation dureté | | 1,0 | 0,0 | -1,0 | | 0,0 | 1,0 |
| Module 25% | (MPa) | 1,4 | 1,4 | 2,0 | | 1,6 | 1,6 |
| Module 50% | (MPa) | 1,9 | 1,8 | 2,6 | | 2,1 | 2,1 |
| Module 100% | (MPa) | 2,70 | 2,50 | 3,30 | | 2,70 | 2,80 |
| Module 300% | (MPa) | 5,10 | | 6,80 | | 5,60 | 6,30 |
| Contrainte rupture | (MPa) | 6,20 | 5,50 | 12,30 | | 8,10 | 8,20 |
| Allongement rupture | % | 305,0 | 275,0 | 425,0 | | 409,0 | 370,0 |
| variation Crupt | | 22 % | 12 % | -3 % | | -9 % | 5 % |
| Variation Arupt | | -3 % | -6 % | -18 % | | -16 % | -13 % |

| **Propriétés à l'état vulcanisé** | | | | | | | |
|---|---|---|---|---|---|---|---|
| DRC 168 h à 70° C | (%) | 52 | 46 | 61 | | 48 | 44 |

Le tableau 8 ci-après détaille les résultats obtenus en termes de propriétés dynamiques pour la seule composition I8 :

**[Tableau 8]**

| RPA Balayage en fréquence (100° C) pour I8 | |
|---|---|
| G* (0,3 Hz) en kPa | 1155 |
| G* (3 Hz) en kPa | 12,2 |
| G* (30 Hz) en kPa | 1295,0 |
| tan δ (3 Hz) | 1,121 |

| RPA Balayage en déformation (100° C) pour I8 | |
|---|---|
| G* 0,5 % en kPa | 1191 |
| G* 20 % en kPa | 982 |
| Ratio G* 0,5 % / G* 20 % (effet Payne) | 1,21 |
| tan δ (0,5 %) | 0,047 |

Le tableau 9 ci-après détaille une formulation commune à la composition I8 et à d'autres compositions I12, I13, I14, I15, et I15' selon l'invention.

**[Tableau 9]**

| | Densité | |
|---|---|---|
| Nordel IP 4570 | 0,86 | 100 |
| PPH 3060 | 0,9 | **Variable** |
| Torilis 7200 | 0,9 | 40 |
| PEG | 1,12 | 1,72 |
| acide stéarique | 0,85 | 0,76 |
| ZnO | 3,7 | 3,1 |
| Accélérateurs | | 3,08 |
| soufre | | 1,89 |
| TOTAL (pce) | | 175,60 |

Le polypropylène PPH 3060 testé était selon le tableau 10 ci-après.

**[Tableau 10]**

| | PPH 3060 |
|---|---|
| Densité (ISO 1183) | 0.905 |
| Point de fusion (ISO 3146) | 165° C |
| Indice de fusion (2,16 kg-230° C)g/10 min. | 1.8 |
| Module en flexion (MPa) | 1300 |
| Izod 23° C (kJ/m²) | 6 |

Les compositions I8, I12 à I15' étaient selon le tableau 11 ci-après.

**[Tableau 11]**

| | **I8** | **I12** | **I13** | **I14** | **I15** | **I15'** |
|---|---|---|---|---|---|---|
| Taux PP (pce) | 25 | 35 | 45 | 55 | 65 | 75 |

Comme visible aux figures 15 à 17, la morphologie obtenue est analogue pour toutes les compositions I8 et I12 à I15', avec le PP dispersé sous forme de nodules de l'ordre du µm dans la matrice EPDM.

Le tableau 12 ci-après détaille les propriétés mécaniques et de renforcement effectif obtenues pour ces compositions réticulées I8 et I12-I15'. En particulier, la figure 18 illustre la variation de dureté Shore A de ces compositions avec le taux de PP en pce.

**[Tableau 12]**

| | | **I8** | **I12** | **I13** | **I14** | **I15** | **I15'** |
|---|---|---|---|---|---|---|---|
| PPH 3060 (en pce) | | 25 | 35 | 45 | 55 | 65 | 75 |
| **Propriétés à l'état initial** | | | | | | | |
| Dureté Shore A | (Point) | 60 | 63 | 71 | 74 | 80 | 82 |
| Module 50% | (MPa) | 1,7 | 2,0 | 2,6 | 3,4 | 4,3 | 5,3 |
| Module 100% | (MPa) | 2,4 | 2,8 | 3,5 | 4,5 | 5,5 | 6,4 |
| Module 300% | (MPa) | 4,8 | 5,9 | 6.8 | 7,9 | 8,8 | 9,4 |
| M300/M100 | | 2,0 | 2,1 | 1,9 | 1,8 | 1,6 | 1,5 |
| Contrainte rupture | (MPa) | 4,9 | 14,0 | 14,2 | 23,1 | 13,3 | 16,8 |
| Allongement rupture | % | 294 | 563 | 542 | 684 | 480 | 544 |
| Déchirement DELFT | N | 24,0 | 34,6 | 40,6 | 53,3 | 53,2 | 59,2 |

| **Vieillissement AIR 168 h à 70° C** | | | | | | | |
|---|---|---|---|---|---|---|---|
| Dureté Shore A | (Point) | 60 | 65 | 73 | 75 | 60 | 65 |
| Variation dureté | | 0 | 2 | 2 | 1 | 0 | 2 |
| Module 50% | (MPa) | 1,8 | 2,4 | 2,9 | 3,7 | 1,8 | 2,4 |
| Module 100% | (MPa) | 2,50 | 3,4 | 4,1 | 4,9 | 2,50 | 3,4 |
| Module 300% | (MPa) | | 7,5 | 8,5 | 9,7 | | 7,5 |
| Contrainte rupture | (MPa) | 5,50 | 13,1 | 15,5 | 19,9 | 5,50 | 13,1 |
| Allongement rupture | % | 275,0 | 438,0 | 453,0 | 481,0 | 275,0 | 438,0 |
| variation Crupt | | 12 % | -0,90 | 1,30 | -3.20 | 12 % | -0,90 |
| Variation Arupt | | -6 % | -125 | -89 | -203 | -6 % | -125 |
| DRC 168 h à 70° C | (%) | 46 | 47 | 48 | 56 | NC | NC |

La figure 19 illustre les propriétés de renforcement satisfaisantes obtenues pour ces compositions I12 à I15'.

Le tableau 13 ci-après détaille la formulation d'une composition témoin C3 (avec une matrice EPDM) en la comparant à celle de la composition I13 précitée selon l'invention, ces deux compositions présentant une même dureté Shore A.

**[Tableau 13]**

| ingrédients | **Densité** | **C3** | **I13** |
|---|---|---|---|
| NORDEL IP | 0,86 | 100 | 100 |
| PPH 3060 | 0,90 | / | 45 |
| Torilis 7200 | 0,90 | 40 | 40 |
| PEG 4000 | 1,12 | 1,72 | 1,72 |
| acide stearique | 0,85 | 0,76 | 0,76 |
| ZnO | 3,70 | 3,10 | 3,10 |
| Sphéron SOA | 1,82 | 90 | / |
| Accélérateurs | | 3,08 | 3,08 |
| S | | 1,89 | 1,89 |
| TOTAL (pce) | | 240,60 | 195,60 |

Comme le montre le tableau 14 ci-après de propriétés à l'état réticulable et réticulé, on observe pour la composition I13 par rapport à la composition témoin C3, une diminution de la densité de 18 %, un allongement du temps de grillage, une amélioration des propriétés à la rupture et une diminution des non-linéarités mécaniques en balayage en déformation (effet Payne) ainsi qu'en fréquence.

**[Tableau 14]**

| | | **C3** | **I13** |
|---|---|---|---|
| Densité | | 1,10 | 0,89 |

| **Propriétés rhéologie177° C 10 min.** | | | |
|---|---|---|---|
| C min | | 2,04 | 0,41 |
| Cmax | | 23,03 | 3,95 |
| Delta C | | 20,99 | 3,54 |
| Ts2 | | | 2,32 |
| t 05 | | 0,68 | 1,10 |
| t 90 | | 5,45 | 6,47 |
| t 95 | | 7,06 | 9,07 |

| **Grillage 125° C** | | | |
|---|---|---|---|
| Couple mini | M : s | 67,2 | 62,7 |
| t5 | min. | 11,17 | 20,09 |
| t35 | min. | 16,22 | 24,52 |

| **Propriétés dynamiques RPA** | | | |
|---|---|---|---|
| RPA Balayage en fréquence | (100°C) | | |
| G* (0,3 Hz) | (kPa) | 2126 | 1907 |
| G* (3 Hz) | (kPa) | 2185,6 | 2044,8 |
| G* (30 Hz) | (kPa) | 2277,5 | 2197,8 |
| G* 30/G*0,3 | | 1,071 | 1,152 |
| tan δ (3 Hz) | | 0,115 | 0,069 |
| **RPA Effet Payne 177° C (100° C)** | | | |
| G*0,5 % | (kPa) | 3885,8 | 2455,6 |
| G*20 % | (kPa) | 1835,9 | 1672,2 |
| Ratio G*0,5 % / G*20 % | | 2,12 | 1,47 |

| **Propriétés à l'état vulcanisé** | | | |
|---|---|---|---|
| Propriétés à l'état initial | | | |
| Dureté Shore A | (Point) | 70 | 71 |
| Dureté Shore A instantanée | (Point) | 71 | / |
| Module 100% | (MPa) | 6,2 | 3.5 |
| Module 200% | (MPa) | 13,5 | / |
| Module 300% | (MPa) | - | 6,8 |
| Contrainte rupture | (MPa) | 15,6 | 14,2 |
| Allongement rupture | % | 246 | 542 |
| Déchirement DELFT | N | 37,3 | 40.6 |

| **Analyse DMA** | | | |
|---|---|---|---|
| Module 15Hz (MPa) | | 11,8 | 17,50 |
| Tan D 15Hz | | 0,210 | 0,2 |
| Module 155Hz (MPa) | | 22,1 | 25,2 |
| M155/M15Hz | | 1,87 | 1,44 |

| **Après vieillissement AIR 7 jours à 70° C** | | | |
|---|---|---|---|
| Dureté Shore A | (Point) | 70 | 73 |
| Variation dureté | | 0 | 2 |
| Module 100% | (MPa) | 6,2 | 4,1 |
| Module 200% | (MPa) | 13,4 | / |
| Module 300% | (MPa) | - | 8 5 |
| Contrainte rupture | (MPa) | 15,3 | 15,5 |
| Allongement rupture | % | 235 | 453,0 |
| variation Crupt | | -2 % | -9 % |
| Variation Arupt | | -4 % | 16 % |

La figure 20 compare les courbes de traction des compositions I13 et C3, montrant le renforcement supérieur de la composition I13.

Le tableau 15 ci-après compare les propriétés dynamiques de cette même composition I13 à celles d'une autre composition témoin C5 toujours à base d'une matrice EPDM.

**[Tableau 15]**

| | **C5** | **I13** |
|---|---|---|
| NORDEL IP 4570 | 100 | 100 |
| N550 | 95 | |
| PPH 3060 | | 45 |
| Torilis 7200 | 40 | 40 |
| PEG | 1,72 | 1,72 |
| acide stéarique | 0,76 | 0,76 |
| ZnO | 3,10 | 3,10 |
| Accélérateurs | 3,08 | 3,08 |
| soufre | 1,89 | 1,89 |
| TOTAL (pce) | 235,60 | 195,60 |

Le tableau 16 ci-après détaille ces propriétés dynamiques avantageuses de la composition I13 (voir notamment tan D et ratio M155/M15Hz), mesurées sur Metravib.

**[Tableau 16]**

| **DMA** | **C5** | **I13** |
|---|---|---|
| Module 15Hz (MPa) | 13,0 | 17,5 |
| Tan D 15Hz | 0,227 | 0,150 |
| Module 155Hz (MPa) | 26,2 | 25,2 |
| M155/M15Hz | 2,02 | 1,44 |

Le tableau 17 ci-après détaille les formulations d'une autre composition I16 selon l'invention en comparaison d'une composition témoin C4, toujours à base d'une matrice EPDM. Ces formulations sont plus particulièrement adaptées pour des joints d'étanchéité de carrosserie de véhicule automobile, et les compositions I16 et C4 présentent des duretés analogues.

**[Tableau 17]**

| **ingrédients** | **C4** | **I16** |
|---|---|---|
| Keltan 5470 | 80,76 | 80,76 |
| Vistalon 3666 | 33,68 | 33,68 |
| SpheronSOA | 129,21 | 5 |
| PPH 3060 | | 30 |
| Torilis 7200 | 74,57 | 40 |
| craie BSH | 57,04 | 57,04 |
| kezadol gr | 10,31 | 10,31 |
| PEG 4000 | 1,72 | |
| acide stéarique | 0,76 | 0,76 |
| ZnO | 3,10 | 3,10 |
| Accélérateurs | 3,08 | 3,08 |
| S | 1,89 | 1,89 |
| Vulkalent E80 | 0,15 | 0,15 |
| TOTAL (pce) | 396,30 | 265,80 |

La composition I16 contient 5 pce de noir de carbone pour garantir la couleur noire et être représentative lors des tests de résistance UV. La morphologie n'était pas observable à cause du taux de charges très élevé (notamment des charges claires).

Comme le montre le tableau 18 ci-après, on a obtenu pour la composition I16 les résultats avantageux suivants par rapport à la composition témoin C4 :
- diminution de la densité (-12 %)
- pas de grillage,
- renforcement analogue (modules similaires), mais résistance à la rupture très nettement améliorée,
- très bonnes propriétés mécaniques après vieillissement,
- déformation rémanente à la compression diminuée de 10 à 20 points,
- décoloration moins prononcée après vieillissement UV CI4000, et
- conductivité très faible.

**[Tableau 18]**

| | **C4** | **I16** |
|---|---|---|
| Densité | 1,23 | 1,09 |

| **MDR Propriétés rhéologie 177° C 10 min** | | |
|---|---|---|
| C min | 1,51 | 0,41 |
| C max | 12,59 | 5,14 |
| Delta C | 11,08 | 4,73 |
| Ts2 | 1,04 | 3,25 |
| t 05 | 0,79 | 2,44 |
| t 90 | 3,05 | 5,78 |
| t 95 | 3,73 | 6,63 |

| **Grillage 125° C** | | |
|---|---|---|
| Couple mini (m : s) | 45,9 | 48,9 |
| t5 (min.) | 14:06 | - |
| t35 (min.) | 20:35 | - |

| **Propriétés à l'état vulcanisé** | | |
|---|---|---|
| Dureté Shore A | 65 | 64 |
| Module 50% (MPa) | 1,4 | 1,4 |
| Module 100% (MPa) | 2,0 | 1,8 |
| Module 300% (MPa) | 4,8 | 3,2 |
| M300/M100 | 2,4 | 1,8 |
| Contrainte rupture (MPa) | 7,2 | 17,8 |
| Allongement rupture (%) | 633 | 733 |

| **Vieillissement AIR 2 semaines à 125°C** | | |
|---|---|---|
| Dureté Shore A | 65 | 65 |
| Variation dureté | 0 | +1 |
| Module 50% (MPa) | 1,6 | 1,7 |
| Module 100% (MPa) | 2,4 | 2,1 |
| Module 300% (MPa) | 5,8 | 4,3 |
| Contrainte rupture (MPa) | 8,3 | 19,8 |
| Allongement rupture (%) | 563,0 | 640,0 |

| **DRC (%)** | | |
|---|---|---|
| 168 h 70° C | 86 | 66 |
| 22 h 23° C | 33 | 21 |
| 22 h 100° C | 92 | 73 |

| **Résistivité** | | |
|---|---|---|
| Résistivité transversale (IEC 62631 3-1) (Ω.cm) | 7,9.10¹ | 1,67.10¹⁵ |

La figure 21 montre la supériorité de la composition I16 par rapport à C4 pour le renforcement, et la figure 22 pour la tenue aux UV (test réalisé selon la norme PSA D27 1389/--G de 2007).

Le tableau 19 ci-après recense les données obtenues après 5 cycles d'exposition aux UV.

**[Tableau 19]**

| | | **C4** | **I16** |
|---|---|---|---|
| **Initial** | **L** | 13,00 | 8,69 |
| | **a** | -0,13 | 0,38 |
| | **b** | -1,07 | -0,11 |
| **5 cycles** | **DL** | 12,38 | 10,63 |
| | **Da** | 0,02 | 0,20 |
| | **Db** | 0,80 | 0,86 |
| | **DE** | 12,41 | 10,67 |
| | **Echelle de gris** | 3 | 3 |

### Deuxième série d'essais sur compositions à matrices NR et phases dispersées PP :

Le tableau 20 ci-après détaille les formulations de deux compositions selon l'invention I17 et I18 comparées à une composition témoin C6, toutes à base de caoutchouc naturel à titre de matrice élastomère.

**[Tableau 20]**

| | **C6** | **I17** | **I18** |
|---|---|---|---|
| PPH 3060 | | 20 | 40 |
| N772 | 40 | | |
| NR | 100 | 100 | 100 |
| Agents de mise en œuvre | 4 | 4 | 4 |
| ZnO | 10 | 10 | 10 |
| Acide stéarique | 2 | 2 | 2 |
| Anti-oxydants | 5 | 5 | 5 |
| Accélérateurs | 4,2 | 4,2 | 4,2 |
| Soufre | 1,1 | 1,1 | 1,1 |
| **TOTAL (pce)** | | **146,3** | **166,3** |

Comme le montre le tableau 21 ci-après, les compositions I17-I18 présentent en comparaison de la composition C6 un renforcement supérieur, de très hauts modules à faible déformation et une tenue améliorée au vieillissement.

**[Tableau 21]**

| **Propriétés à l'état initial** | | **C6** | **I17** | **I18** |
|---|---|---|---|---|
| Dureté Shore A | (Point) | 49,0 | 64 | 78 |
| Module 100% | (MPa) | 2,0 | 7,8 | 23,8 |
| Module 200% | (MPa) | 5,4 | 11,9 | - |
| Module 300% | (MPa) | 10,6 | 15,4 | - |
| Contrainte rupture | (MPa) | 25,8 | 19,0 | 23,1 |
| Allongement rupture | % | 507 | 360 | 104 |
| Déchirement DELFT | N | | | |

| **Vieillissement AIR 14j à 100°C** | | | | |
|---|---|---|---|---|
| Dureté Shore A | (Point) | 58 | 70 | 81 |
| Variation dureté | | 9 | 6 | 4 |
| Module 100% | (MPa) | 4 | 9,7 | - |
| Module 200% | (MPa) | 10 | - | - |
| Module 300% | (MPa) | | - | - |
| Contrainte rupture | (MPa) | 11,8 | 11,5 | 20,7 |
| Allongement rupture | % | 222 | 131 | 64 |
| variation Crupt | | -42 % | -39 % | -10 % |
| Variation Arupt | | -44 % | -64 % | -38 % |

Le tableau 22 ci-après détaille une formulation commune à trois autres compositions selon l'invention I19, I20, I21 à base de NR, en comparaison d'une autre composition témoin C7 également à base de NR.

**[Tableau 22]**

| | **Compositions C7, I19-I21** |
|---|---|
| PPH 3060 | **variable** |
| N772 | |
| NR | 100 |
| Agents de mise en oeuvre | 4 |
| ZnO | 10 |
| Acide stéarique | 2 |
| Antioxydants | 5 |
| Accélérateurs | 4,20 |
| Soufre | 1,10 |
| TOTAL (pce) | 146,30 |

Le tableau 23 ci-après détaille les propriétés mécaniques obtenues.

**[Tableau 23]**

| | **Densité** | **C7** | **I19** | **I20** | **I21** |
|---|---|---|---|---|---|
| PPH 3060 | 0,86 | 0 | 5 | 10 | 20 |

| **Propriétés à l'état initial** | | | | | |
|---|---|---|---|---|---|
| Dureté Shore A | (Point) | 37 | 47 | 60 | 68 |
| Module 1 00% | (MPa) | 0,8 | 1,6 | 3,3 | 5,0 |
| Module 200% | (MPa) | 1,3 | 2,7 | 5,2 | 8,4 |
| Module 300% | (MPa) | 2,0 | 4,1 | 7,2 | 11,8 |
| Contrainte rupture | (MPa) | >7 | >13 | >16 | > 13 |
| Allongement rupture | % | >523 | >485 | >484 | >319 |
| Déchirement DELFT | N | | | | |

| **DMA** | | | | | |
|---|---|---|---|---|---|
| Module 15Hz (MPa) | | 2,11 | 3,05 | 4,81 | 8,98 |
| Tan D 15Hz | | 0,031 | 0,053 | 0,760 | 0,107 |
| Module 155Hz (MPa) | | 2,27 | 3,50 | 5,78 | 11,70 |
| M155/M15Hz | | 1,08 | 1,15 | 1,20 | 1,30 |

Ce tableau 23 montre qu'il est possible d'ajuster le niveau de renforcement pour les compositions I19-I21 en modifiant le taux de PP dispersé dans le NR, et la figure 23 montre l'évolution de la dureté Shore A de ces compositions 119-121 par rapport à la composition C7.

### Troisième série d'essais sur compositions à matrices en caoutchouc silicone et phases dispersées en résine silicone phénylée :

On a testé six compositions selon l'invention I22, I23, I24, I25, I26 et I27 en comparaison d'une composition témoin C8, toutes à base d'un PDMS à titre de caoutchouc silicone et comprenant une résine thermoplastique phényl silicone dispersée à l'exception de la composition C8. Les compositions I22 à I27 comprenaient :
- 100 pce de base caoutchouc silicone Momentive SilPlus70HS (polydimethylsiloxane)
- une résine phénylée dont le point de ramollissement est de 60-70° C (BELSIL^{®} SPR 45 VP de chez Wacker), et
- 1 pce d'un peroxyde DBPH (2,5-dimethyl-2,5-bis-(tert-butylperoxy)hexane).

La morphologie obtenue pour ces compositions I22 à I27 était composée d'une matrice PDMS contenant des nodules de cette résine de l'ordre du micromètre (voir le cliché de la figure 24 relatif à la composition I26 avec 50 pce de résine).

Comme le montre le tableau 24 ci-après, quelle que soit la concentration en résine, la matrice PDMS des compositions I22 à I27 est renforcée de manière satisfaisante.

**[Tableau 24]**

| | Taux de résine (pce) | Dureté Shore A | M 100% | Contrainte rupture (MPa) | Elongation à rupture (%) |
|---|---|---|---|---|---|
| **C8** | 0 | 61 | 1,9 | 9,0 | 930 |
| **I22** | 5 | 65 | 2,0 | 7,2 | 770 |
| **I23** | 10 | 73 | 2,4 | 6,8 | 720 |
| **I24** | 20 | NC | 2,8 | 5,5 | 600 |
| **I25** | 30 | 77 | 3,3 | 4,2 | 400 |
| **I26** | 50 | 81 | 3,5 | 3,8 | 220 |
| **I27** | 70 | 82 | 3,7 | 3,8 | 150 |

Comme le montre le tableau 25 ci-après relatifs à des essais dynamiques (DMA), contrairement aux charges renforçantes conventionnelles (silice dans le cas des silicones), le niveau de renforcement élevé de la composition I26 ne génère avantageusement pas de non-linéarités mécaniques (effet Payne réduit).

**[Tableau 25]**

| | 25° C | | 60° C | |
|---|---|---|---|---|
| | C8 | I26 | C8 | I26 |
| G' 0,1 % | 15 | 32 | 11 | 20 |
| G'8% | 5 | 12 | 5 | 11 |
| G' 0,1% / G' 8% | 3,0 | 2,7 | 2,2 | 1,8 |

## Revendications

1. Composition de caoutchouc réticulable à base d'au moins un élastomère, la composition comprenant d'autres ingrédients qui comprennent un système de réticulation et une phase polymérique thermoplastique qui présente au moins une température de fusion Tf et qui est dispersée dans ledit au moins un élastomère sous forme de nodules, la composition réticulable comprenant le produit :
a) d'une réaction en voie fondue par travail thermomécanique d'un mélange réactionnel comprenant ledit au moins un élastomère et lesdits autres ingrédients à l'exception du système de réticulation pour l'obtention d'un mélange précurseur de la composition réticulable, puis
b) d'un travail mécanique dudit mélange précurseur avec ajout préalable du système de réticulation pour l'obtention de la composition réticulable,
dans laquelle :
- les nodules présentent une plus grande dimension transversale moyenne en poids comprise entre 10 nm et 10 µm,
- ladite réaction comprend un échauffement du mélange réactionnel jusqu'à une température maximale Ta de mélangeage qui est supérieure à ladite au moins une température de fusion Tf la plus élevée de la phase polymérique thermoplastique et qui est maintenue pendant une durée de maintien, et
- le système de réticulation comprend du soufre lorsque ledit au moins un élastomère est insaturé et ladite phase polymérique thermoplastique comprend des chaînes polymériques saturées, et comprend un peroxyde lorsque ledit au moins un élastomère est saturé.

2. Composition réticulable selon la revendication 1, dans laquelle :
- les nodules présentent une plus grande dimension transversale moyenne en poids comprise entre 100 nm et 10 µm, et
- la durée de maintien de ladite température maximale Ta de mélangeage est d'au moins 10 secondes.

3. Composition réticulable selon la revendication 1 ou 2, dans laquelle la composition réticulable comprend, à titre de charge en poudre dispersée dans ledit au moins un élastomère, de 0 à 100 pce d'une charge organique telle que du noir de carbone et de 0 à 70 pce d'une charge inorganique non renforçante autre qu'une silice (pce : parties en poids pour 100 parties d'élastomère(s)), et de préférence dans laquelle la composition réticulable est totalement dépourvue de charge en poudre organique ou inorganique.

4. Composition réticulable selon une des revendications 1 à 3, dans laquelle la composition réticulable présente une résistance au grillage mesurée selon la norme ISO 289-2 par des temps t5 et t35 sans réticulation prématurée de la composition qui sont tous deux supérieurs à 17 min. et de préférence supérieurs à 20 min., t5 et t35 étant relatifs à des incréments de viscosité Mooney ML(1+4) à 125° C par rapport à la viscosité Mooney initiale respectivement de +5 et +35 points.

5. Composition réticulable selon une des revendications 1 à 4, dans laquelle le système de réticulation comprend du soufre et optionnellement en outre un peroxyde, ledit au moins un élastomère étant un caoutchouc choisi parmi :
- les caoutchoucs oléfiniques, tels que les copolymères éthylène-alpha oléfine(s) comme par exemple les copolymères éthylène-propylène (EPM) et les terpolymères éthylène-propylène-diène (EPDM), et
- les caoutchoucs diéniques issus au moins en partie de monomères diènes conjugués, tels que le caoutchouc naturel (NR), les homopolymères et copolymères de l'isoprène et les homopolymères et copolymères du butadiène, et dans laquelle ladite phase polymérique thermoplastique comprend au moins un polymère saturé de préférence choisi parmi les polyoléfines aliphatiques ou aromatiques fonctionnalisées ou non, comme par exemple des homopolymères ou copolymères d'éthylène ou de propylène,
et de préférence dans laquelle ledit au moins un élastomère est un EPDM dont le taux massique d'unités issues de l'éthylène est compris entre 15 % et 80 % et ladite phase polymérique thermoplastique comprend au moins une dite polyoléfine aliphatique choisie parmi les homopolymères d'éthylène, les homopolymères de propylène et les terpolymères polypropylène-éthylène-diène ayant un taux massique d'unités issues de l'éthylène compris entre 1 % et 15 %.

6. Composition réticulable selon une des revendications 1 à 4, dans laquelle le système de réticulation comprend un peroxyde et optionnellement en outre du soufre, ledit au moins un élastomère étant saturé et ladite phase polymérique thermoplastique comprenant des chaînes polymériques saturées ou insaturée, et dans laquelle de préférence ledit au moins un élastomère est un caoutchouc silicone par exemple choisi parmi les polydiméthylsiloxanes (PDMS), et ladite phase polymérique thermoplastique comprend au moins un polymère saturé par exemple choisi parmi les résines phényl silicone ou alkyl silicone.

7. Composition réticulable selon une des revendications précédentes, dans laquelle la composition réticulable comprend ladite phase polymérique thermoplastique selon une quantité comprise entre 1 et 150 pce (pce : parties en poids pour 100 parties d'élastomère(s)) et de préférence comprise entre 5 et 70 pce, et dans laquelle lesdits nodules formés par ladite phase polymérique thermoplastique présentent ladite plus grande dimension transversale moyenne en poids comprise entre 150 nm et 3 µm, de préférence entre 300 nm et 2 µm, lesdits nodules étant par exemple sphériques ou ellipsoïdaux.

8. Composition de caoutchouc réticulée, dans laquelle la composition réticulée est le produit d'une réticulation thermique de la composition réticulable selon l'une des revendications précédentes par réaction chimique avec ledit système de réticulation,
de préférence dans laquelle la composition réticulée comprend, à titre de charge en poudre dispersée dans ledit au moins un élastomère, de 0 à 100 pce d'une charge organique telle que du noir de carbone et de 0 à 70 pce d'une charge inorganique autre qu'une silice, et de préférence dans laquelle la composition réticulée est totalement dépourvue de ladite charge en poudre organique ou inorganique.
de préférence dans laquelle la composition réticulée présente :
- une densité inférieure à 1,10, de préférence inférieure ou égale à 1, et/ou
- une résistivité transversale, mesurée selon la norme IEC 62631 3-1, supérieure à 10¹⁰ Ω.cm et de préférence supérieure à 10¹⁴ Ω.cm,
et de préférence dans laquelle la composition réticulée présente une dureté Shore A mesurée selon la norme ASTM D2240 et un rapport G' 0,5% / G' 20% de modules de conservation G' relatifs aux modules de cisaillement complexes G* vérifiant l'une au moins des conditions suivantes (i) et (ii) à 100° C:
(i) G' 0,5% / G' 20% ≤ 1,50 si la dureté Shore A est de 40 à 50, ≤ 1,80 si la dureté Shore A est de 51 à 60, et ≤ 2,00 si la dureté Shore A est de 51 à 60,
(ii) tan delta à 0,5 % de déformation ≤ 0,080, de préférence ≤ 0,050 ,
G' 0,5% et G' 20% étant mesurés à des amplitudes de déformations dynamiques respectives de 0,5 % et 20 % sur des éprouvettes de double cisaillement réticulées à 177° C et soumises à un balayage en déformations de cisaillement de 0,5 % à 60 % à une même fréquence de 1,7 Hz et à une même température de 100° C, et tan delta représentant le facteur de perte mesuré lors dudit balayage en déformations.

9. Composition réticulée selon la revendication 8, dans laquelle ledit au moins un élastomère comprend un caoutchouc oléfinique tel qu'un EPM ou EPDM et ladite phase polymérique thermoplastique comprend au moins une polyoléfine aliphatique, et dans laquelle la composition réticulée présente une dureté Shore A mesurée selon la norme ASTM D2240 et un rapport G' 30Hz / G' 0,3Hz de modules de conservation G' relatifs aux modules de cisaillement complexes G* et un facteur de perte tan delta vérifiant l'une au moins des conditions suivantes (i) et (ii) à 100° C:
(i) G' 30Hz / G' 0,3Hz ≤ 1,20 si la dureté Shore A est de 51 à 60 et ≤ 1,10 si la dureté Shore A est de 61 à 70,
(ii) tan delta à 3 Hz ≤ 0,80 si la dureté Shore A est de 51 à 60 et ≤ 0,10 si la dureté Shore A est de 61 à 70,
G' 30Hz et G' 0,3Hz étant mesurés à une amplitude de déformation dynamique de 0,5 % sur des éprouvettes de double cisaillement réticulées à 177° C et soumises à un balayage en fréquences de 0,100 Hz à 30 000 Hz à une même température de 100° C, et tan delta étant mesurée à 3 Hz lors dudit balayage en fréquences ;
ou dans laquelle :
ledit au moins un élastomère comprend un caoutchouc oléfinique tel qu'un EPM ou EPDM, ou un caoutchouc diénique issu au moins en partie d'un monomère diène conjugué tel que du caoutchouc naturel, dans laquelle ladite phase polymérique thermoplastique comprend au moins une polyoléfine aliphatique, et dans laquelle la composition réticulée présente une dureté Shore A mesurée selon la norme ASTM D2240 et un rapport de modules M 155Hz / M 15Hz et un facteur de perte tan D à 15 Hz qui sont mesurés à 23° C via un balayage en fréquences selon la norme ISO 4664 par un visco-analyseur Metravib^{®} sur des éprouvettes Metravib^{®} de type plots et qui vérifient l'une au moins des conditions suivantes (i) et (ii) :
(i) M 155Hz / M 15Hz ≤ 1,50 si la dureté Shore A est de 40 à 50 et ≤ 2,00 si la dureté Shore A est de 61 à 70,
(ii) tan D à 15 Hz ≤ 0,10 si la dureté Shore A est de 40 à 50, ≤ 0,15 si la dureté Shore A est de 51 à 60, et ≤ 0,20 si la dureté Shore A est de 61 à 70.

10. Composition réticulée selon la revendication 8 ou 9, dans laquelle ledit au moins un élastomère comprend un caoutchouc oléfinique tel qu'un EPM ou EPDM et ladite phase polymérique thermoplastique comprend au moins une polyoléfine aliphatique, et dans laquelle la composition réticulée satisfait à l'une au moins des conditions (i) à (iii) ci-après :
(i) un allongement à la rupture, mesuré en traction uni-axiale selon la norme ASTM D 412, supérieur à 250 % et de préférence supérieur à 400 % ;
(ii) une contrainte à la rupture, mesurée en traction uni-axiale selon la norme ASTM D 412, supérieure à 4 MPa et de préférence supérieure à 12 MPa ; et
(iii) une dureté Shore A mesurée après 3 secondes selon la norme ASTM D2240 qui est supérieure à 40 et de préférence égale ou supérieure à 60.

11. Composition réticulée selon la revendication 8, dans laquelle ledit au moins un élastomère comprend un caoutchouc silicone de préférence choisi parmi les polydiméthylsiloxanes (PDMS) et ladite phase polymérique thermoplastique comprend au moins un polymère saturé de préférence choisi parmi les résines phényl silicone ou alkyl silicone, et dans laquelle la composition réticulée est totalement dépourvue de ladite charge en poudre telle que de la silice ;
ou dans laquelle ledit au moins un élastomère comprend un caoutchouc diénique issu au moins en partie d'un monomère diène conjugué, tel que du caoutchouc naturel, et ladite phase polymérique thermoplastique comprend au moins une polyoléfine aliphatique, et dans laquelle la composition réticulée satisfait à l'une au moins des conditions (i) à (iii) ci-après :
(i) l'un au moins des modules sécants M100, M200 et M300 suivants respectivement à 100 %, 200 % et 300 % de déformation, mesurés en traction uni-axiale selon la norme ASTM D 412 :
M100 supérieur à 3 MPa, de préférence égal ou supérieur à 5 MPa,
M200 supérieur à 6 MPa, de préférence égal ou supérieur à 8 MPa,
M300 supérieur à 11 MPa, de préférence égal ou supérieur à 13 MPa;
(ii) une contrainte à la rupture, mesurée en traction uni-axiale selon la norme ASTM D 412, supérieure à 13 MPa et de préférence supérieure à 18 MPa ; et
(iii) une dureté Shore A mesurée après 3 secondes selon la norme ASTM D2240 qui est supérieure à 45 et de préférence égale ou supérieure à 60.

12. Organe mécanique à fonction dynamique en particulier choisi parmi des supports antivibratoires et des articulations élastiques pour véhicules à moteur ou dispositifs industriels, ledit organe comprenant au moins une partie élastique qui est constituée d'une composition de caoutchouc réticulée et qui est adaptée pour être soumise à des sollicitations dynamiques, dans lequel ladite composition réticulée est selon une des revendications 8 à 11.

13. Elément d'étanchéité en particulier choisi parmi les joints d'étanchéité pour carrosserie de véhicule et les profilés d'étanchéité pour bâtiment, ledit élément d'étanchéité comprenant une partie élastique qui est constituée d'une composition de caoutchouc réticulée, dans lequel la composition de caoutchouc réticulée est selon une des revendications 8 à 11.

14. Procédé de préparation d'une composition réticulable selon une des revendications 1 à 7, dans lequel le procédé comprend les étapes suivantes :
a) Introduction dans un mélangeur interne par exemple tangentiel ou engrenant, ou dans une extrudeuse à vis par exemple bi-vis, dudit au moins un élastomère puis desdits autres ingrédients à l'exception dudit système de réticulation ;
b) Travail thermomécanique dans ledit mélangeur interne ou dans ladite extrudeuse à vis, comprenant un mélangeage par voie fondue dudit mélange réactionnel à l'exception du système de réticulation pour l'obtention d'un mélange précurseur de la composition réticulable, l'étape b) comprenant
b1) un échauffement dudit mélange réactionnel jusqu'à ladite température maximale Ta de mélangeage qui est supérieure à ladite au moins une température de fusion Tf la plus élevée de ladite phase polymérique thermoplastique, de préférence d'un écart Ta-Tf compris entre 1 et 50° C ; et
b2) une stabilisation dudit échauffement par maintien de ladite température maximale Ta de mélangeage pendant ladite durée de maintien d'au moins 10 secondes, ladite durée de maintien étant de préférence comprise entre 20 secondes et 10 min.;
c) Extraction du mélange hors dudit mélangeur interne ou de ladite extrudeuse à vis, et optionnellement refroidissement ; puis
d) Travail mécanique dudit mélange précurseur avec ajout préalable dudit système de réticulation comprenant du soufre et/ou un peroxyde pour l'obtention de la composition réticulable.

15. Procédé de préparation d'une composition réticulable selon la revendication 14, dans laquelle on réalise l'échauffement de l'étape b) par l'utilisation :
- dans ledit mélangeur interne :
d'un taux de cisaillement dudit mélange réactionnel dans le mélangeur interne d'au moins 80 s⁻¹, de préférence d'au moins 150 s⁻¹, par exemple mis en oeuvre à une vitesse de rotation de pales de rotor dans ledit mélangeur interne comprise entre 10 et 200 tours/min. et de préférence entre 50 et 120 tours/min., et/ou
d'une double paroi dans le mélangeur interne recevant un fluide caloporteur, et/ou en utilisant un taux de remplissage du mélangeur interne supérieur à 100 % ; ou
- dans ladite extrudeuse à vis, d'éléments chauffants par exemple électriques, qui équipent l'extrudeuse.

## Patentansprüche

1. Vernetzbare Kautschukzusammensetzung auf der Basis wenigstens eines Elastomers, wobei die Zusammensetzung weitere Bestandteile enthält, die ein Vernetzungssystem und eine thermoplastische Polymerphase umfassen, die wenigstens eine Schmelztemperatur Tf aufweist und in dem wenigstens einen Elastomer in Form von Knötchen dispergiert ist, wobei die vernetzbare Zusammensetzung das Produkt umfasst aus:
a) einer Schmelzreaktion durch thermomechanische Bearbeitung eines Reaktionsgemisches, das das wenigstens eine Elastomer und die anderen Bestandteile mit Ausnahme des Vernetzungssystems umfasst, um ein Vorläufergemisch der vernetzbaren Zusammensetzung zu erhalten, dann
b) mechanisches Bearbeiten der Vorläufermischung mit vorheriger Zugabe des Vernetzungssystems zur Gewinnung der vernetzbaren Zusammensetzung,
wobei:
- die Knötchen eine größte gewichtsmittlere Querschnittsabmessung zwischen 10 nm und 10 µm aufweisen,
- die Reaktion ein Erhitzen des Reaktionsgemisches auf eine maximale Mischtemperatur Ta umfasst, die höher ist als die wenigstens eine höchste Schmelztemperatur Tf der thermoplastischen Polymerphase, und die für eine Haltezeit aufrechterhalten wird, und
- wobei das Vernetzungssystem Schwefel umfasst, wenn das wenigstens eine Elastomer ungesättigt ist und die thermoplastische Polymerphase gesättigte Polymerketten umfasst, und ein Peroxid umfasst, wenn das wenigstens eine Elastomer gesättigt ist.

2. Vernetzbare Zusammensetzung nach Anspruch 1, wobei:
- die Knötchen eine größte gewichtsmittlere Querschnittsabmessung zwischen 100 nm und 10 µm aufweisen, und
- die Dauer der Aufrechterhaltung der genannten maximalen Mischtemperatur Ta wenigstens 10 Sekunden beträgt.

3. Vernetzbare Zusammensetzung nach Anspruch 1 oder 2, wobei die vernetzbare Zusammensetzung als pulverförmigen Füllstoff, der in dem wenigstens einen Elastomer dispergiert ist, 0 bis 100 pce eines organischen Füllstoffs wie Ruß und 0 bis 70 pce eines nichtverstärkenden anorganischen Füllstoffs außer Siliciumdioxid umfasst (pce: Gewichtsteile pro 100 Teile Elastomer(e)), und bevorzugt wobei die vernetzbare Zusammensetzung vollständig frei von organischem oder anorganischem pulverförmigem Füllstoff ist.

4. Vernetzbare Zusammensetzung nach einem der Ansprüche 1 bis 3, wobei die vernetzbare Zusammensetzung eine Vernetzungsbeständigkeit aufweist, die nach ISO 289-2 zu den Zeitpunkten t5 und t35 ohne vorzeitige Vernetzung der Zusammensetzung gemessen wird, die beide größer als 17 min und bevorzugt größer als 20 min sind, wobei sich t5 und t35 auf Inkremente der Mooney-Viskosität ML(1+4) bei 125° C gegenüber der anfänglichen Mooney-Viskosität von +5 bzw. +35 Punkten beziehen.

5. Vernetzbare Zusammensetzung nach einem der Ansprüche 1 bis 4, wobei das Vernetzungssystem Schwefel und optional ferner ein Peroxid umfasst, wobei das wenigstens eine Elastomer ein Kautschuk ist, der gewählt ist aus:
- Olefinkautschuken, wie Ethylen-Alpha-Olefin-Copolymere(n) wie z. B. Ethylen-Propylen-Copolymere (EPM) und Ethylen-Propylen-Dien-Terpolymere (EPDM), und
- Dienkautschuke, die wenigstens teilweise von konjugierten Dienmonomeren stammen, wie Naturkautschuk (NR), Homopolymere und Copolymere von Isopren und Homopolymere und Copolymere von Butadien, und wobei die thermoplastische Polymerphase wenigstens ein gesättigtes Polymer umfasst, das bevorzugt unter funktionalisierten oder nicht funktionalisierten aliphatischen oder aromatischen Polyolefinen gewählt ist, wie z. B. Homopolymere oder Copolymere von Ethylen oder Propylen,
und bevorzugt wobei das wenigstens eine Elastomer ein EPDM ist, dessen Masseanteil an Einheiten, die von Ethylen abstammen, zwischen 15 % und 80 % liegt, und wobei die thermoplastische Polymerphase wenigstens ein aliphatisches Polyolefin umfasst, das aus Ethylenhomopolymeren, Propylenhomopolymeren und Polypropylen-Ethylen-Dien-Terpolymeren mit einem Masseanteil an Einheiten, die von Ethylen stammen, zwischen 1 % und 15 % gewählt ist.

6. Vernetzbare Zusammensetzung nach einem der Ansprüche 1 bis 4, wobei das Vernetzungssystem ein Peroxid und optional zusätzlich Schwefel umfasst, wobei das wenigstens eine Elastomer gesättigt ist und die thermoplastische Polymerphase gesättigte oder ungesättigte Polymerketten umfasst, und wobei bevorzugt das wenigstens eine Elastomer ein Silikonkautschuk ist, der beispielsweise aus Polydimethylsiloxanen (PDMS) gewählt ist, und wobei die thermoplastische Polymerphase wenigstens ein gesättigtes Polymer umfasst, das beispielsweise aus Phenylsilikon- oder Alkylsilikonharzen gewählt ist.

7. Vernetzbare Zusammensetzung nach einem der vorhergehenden Ansprüche, wobei die vernetzbare Zusammensetzung die thermoplastische Polymerphase in einer Menge von 1 bis 150 pce (pce: Gewichtsteile pro 100 Teile Elastomer(e)) und bevorzugt von 5 bis 70 pce umfasst und wobei die durch die thermoplastische Polymerphase gebildeten Knötchen die größte gewichtsmittlere Querschnittsabmessung von 150 nm bis 3 µm, bevorzugt von 300 nm bis 2 µm aufweisen, wobei die Knötchen beispielsweise kugelförmig oder ellipsoidal sind.

8. Vernetzte Kautschukzusammensetzung, wobei die vernetzte Zusammensetzung das Produkt einer thermischen Vernetzung der vernetzbaren Zusammensetzung nach einem der vorhergehenden Ansprüche durch chemische Reaktion mit dem Vernetzungssystem ist,
bevorzugt wobei die vernetzte Zusammensetzung als pulverförmigen Füllstoff, der in dem wenigstens einen Elastomer dispergiert ist, 0 bis 100 pce eines organischen Füllstoffs wie Ruß und 0 bis 70 pce eines anorganischen Füllstoffs, der kein Siliciumdioxid ist, umfasst, und bevorzugt wobei die vernetzte Zusammensetzung vollständig frei von dem organischen oder anorganischen pulverförmigen Füllstoff ist,
bevorzugt wobei die vernetzte Zusammensetzung aufweist:
- eine Dichte von weniger als 1,10, bevorzugt weniger als oder gleich 1, und/oder
- einen spezifischen Querwiderstand, gemessen nach IEC 62631 3-1, von mehr als 10¹⁰ Ω.cm und bevorzugt mehr als 10¹⁴ Ω.cm,
und bevorzugt wobei die vernetzte Zusammensetzung eine Shore-A-Härte, gemessen nach ASTM D2240, und ein Verhältnis G' 0,5 % / G' 20 % von Erhaltungsmodulen G' bezogen auf komplexe Schermodule G* aufweist, die wenigstens eine der folgenden Bedingungen (i) und (ii) bei 100 °C erfüllen:
(i) G' 0,5 % / G' 20 % ≤ 1,50, wenn die Shore-A-Härte 40 bis 50 beträgt, ≤ 1,80, wenn die Shore-A-Härte 51 bis 60 beträgt, und ≤ 2,00, wenn die Shore-A-Härte 51 bis 60 beträgt,
(ii) tan delta bei 0,5 % Verformung ≤ 0,080, bevorzugt ≤ 0,050, wobei G' 0,5 % und G' 20 % bei jeweiligen dynamischen Verformungsamplituden von 0,5 % und 20 % an Doppelscherproben gemessen werden, die bei 177 °C vernetzt werden und einer Abtastung der Scherverformungen von 0, 5 % bis 60 % bei einer gleichen Frequenz von 1,7 Hz und einer gleichen Temperatur von 100 °C unterzogen werden, und tan delta den Verlustfaktor darstellt, der bei der genannten Deformationsabtastung gemessen wurde.

9. Vernetzte Zusammensetzung nach Anspruch 8, wobei das wenigstens eine Elastomer einen olefinischen Kautschuk wie beispielsweise einen EPM oder EPDM umfasst und die thermoplastische Polymerphase wenigstens ein aliphatisches Polyolefin umfasst, und wobei die vernetzte Zusammensetzung eine Shore-A-Härte, gemessen nach ASTM D2240, und ein Verhältnis G' 30Hz / G' 0,3Hz von Erhaltungsmodulen G', die sich auf komplexe Schermodule G* beziehen, und einen Verlustfaktor tan delta aufweist, der wenigstens eine der folgenden Bedingungen (i) und (ii) bei 100 °C erfüllt:
(i) G' 30Hz / G' 0,3Hz ≤ 1,20, wenn die Shore-A-Härte 51 bis 60 beträgt, und ≤ 1,10, wenn die Shore-A-Härte 61 bis 70 beträgt,
(ii) tan delta bei 3 Hz ≤ 0,80, wenn die Shore A-Härte 51 bis 60 beträgt, und ≤ 0,10, wenn die Shore A-Härte 61 bis 70 beträgt,
wobei G' 30Hz und G' 0,3Hz bei einer dynamischen Verformungsamplitude von 0,5 % an Doppelscherproben gemessen werden, die bei 177° C vernetzt werden und einer Abtastung bei Frequenzen von 0,100 Hz bis 30 000 Hz bei derselben Temperatur von 100° C unterzogen werden, und wobei tan delta bei 3 Hz während der Frequenzabtastung gemessen wird;
oder in welcher:
das wenigstens eine Elastomer einen Olefinkautschuk, wie beispielsweise einen EPM oder EPDM oder einen Dienkautschuk, der wenigstens teilweise von einem konjugierten Dienmonomer stammt, wie Naturkautschuk, umfasst, wobei die thermoplastische Polymerphase wenigstens ein aliphatisches Polyolefin umfasst, und wobei die vernetzte Zusammensetzung eine Shore-A-Härte, gemessen nach ASTM D2240, ein Modulverhältnis M 155Hz / M 15Hz und einen Verlustfaktor tan D bei 15 Hz aufweist, die bei 23 °C über eine Frequenzabtastung gemäß ISO 4664 mit einem Metravib^{®}-Viskoanalysator an Metravib^{®}-Proben vom Plottyp gemessen werden und die wenigstens eine der folgenden Bedingungen (i) und (ii) erfüllen:
(iii) M 155Hz / M 15Hz ≤ 1,50, wenn die Shore-A-Härte 40 bis 50 beträgt, und ≤ 2,00, wenn die Shore-A-Härte 61 bis 70 beträgt,
(iv) tan D bei 15 Hz ≤ 0,10, wenn die Shore-A-Härte 40 bis 50 beträgt, ≤ 0,15, wenn die Shore-A-Härte 51 bis 60 beträgt, und ≤ 0,20, wenn die Shore-A-Härte 61 bis 70 beträgt.

10. Vernetzte Zusammensetzung nach Anspruch 8 oder 9, wobei das wenigstens eine Elastomer einen olefinischen Kautschuk wie EPM oder EPDM umfasst und die thermoplastische Polymerphase wenigstens ein aliphatisches Polyolefin umfasst, und wobei die vernetzte Zusammensetzung wenigstens eine der folgenden Bedingungen (i) bis (iii) erfüllt:
(i) eine Bruchdehnung, gemessen unter einachsiger Zugbelastung nach ASTM D 412, von mehr als 250 % und bevorzugt mehr als 400 %;
(ii) eine Bruchspannung, gemessen in einachsigem Zug nach ASTM D 412, von mehr als 4 MPa und bevorzugt mehr als 12 MPa; und
(iii) eine Shore-A-Härte, gemessen nach 3 Sekunden nach ASTM D2240, die größer als 40 und bevorzugt größer gleich 60 ist.

11. Vernetzte Zusammensetzung nach Anspruch 8, wobei das wenigstens eine Elastomer einen Silikonkautschuk umfasst, der bevorzugt unter Polydimethylsiloxanen (PDMS) gewählt ist, und die thermoplastische Polymerphase wenigstens ein gesättigtes Polymer umfasst, das bevorzugt aus Phenyl- oder Alkylsilikonharzen gewählt ist, und wobei die vernetzte Zusammensetzung vollständig frei von dem pulverförmigen Füllstoff wie Siliciumdioxid ist; oder wobei das wenigstens eine Elastomer einen Dienkautschuk umfasst, der wenigstens teilweise von einem konjugierten Dienmonomer, wie Naturkautschuk, abgeleitet ist, und die thermoplastische Polymerphase wenigstens ein aliphatisches Polyolefin umfasst, und wobei die vernetzte Zusammensetzung wenigstens eine der folgenden Bedingungen (i) bis (iii) erfüllt:
(i) wenigstens eines der folgenden Sekantenmodule M100, M200 und M300 bei 100 %, 200 % bzw. 300 % Dehnung, gemessen in einachsigem Zug nach ASTM D 412:
M100 größer als 3 MPa, bevorzugt größer gleich 5 MPa,
M200 größer als 6 MPa, bevorzugt größer gleich 8 MPa,
M300 größer als 11 MPa, bevorzugt größer gleich 13 MPa;
(ii) eine Bruchspannung, gemessen unter einachsiger Zugbelastung nach ASTM D 412, von mehr als 13 MPa und bevorzugt mehr als 18 MPa; und
(iii) eine Shore-A-Härte, gemessen nach 3 Sekunden nach ASTM D224O, die größer als 45 und bevorzugt größer gleich 60 ist.

12. Mechanisches Element mit dynamischer Funktion, insbesondere gewählt aus schwingungsdämpfenden Lagern und elastischen Gelenken für Kraftfahrzeuge oder industrielle Vorrichtungen, wobei das Element wenigstens einen elastischen Teil umfasst, der aus einer vernetzten Gummizusammensetzung besteht und dazu geeignet ist, dynamischen Belastungen ausgesetzt zu werden, wobei die vernetzte Zusammensetzung gemäß einem der Ansprüche 8 bis 11 ausgebildet ist.

13. Dichtungselement, insbesondere gewählt aus Fahrzeugkarosseriedichtungen und Gebäudedichtungsprofilen, wobei das Dichtungselement einen elastischen Teil umfasst, der aus einer vernetzten Gummizusammensetzung besteht, wobei die vernetzte Gummizusammensetzung gemäß einem der Ansprüche 8 bis 11 ausgebildet ist.

14. Verfahren zur Herstellung einer vernetzbaren Zusammensetzung nach einem der Ansprüche 1 bis 7, wobei das Verfahren die folgenden Schritte umfasst:
a) Einbringen des wenigstens einen Elastomers und anschließend der anderen Bestandteile mit Ausnahme des Vernetzungssystems in einen Innenmischer, z. B. einen Tangential- oder Zahneingriffsmischer, oder in einen Schneckenextruder, z. B. einen Doppelschneckenextruder;
b) Thermomechanische Bearbeitung in dem Innenmischer oder in dem Schneckenextruder, umfassend ein Schmelzmischen der Reaktionsmischung mit Ausnahme des Vernetzungssystems, um eine Vorläufermischung der vernetzbaren Zusammensetzung zu erhalten, wobei der Schritt b) Folgendes umfasst:
b1) ein Erwärmen des Reaktionsgemisches auf die maximale Mischtemperatur Ta, die höher ist als die wenigstens eine höchste Schmelztemperatur Tf der thermoplastischen Polymerphase, bevorzugt um einen Abstand Ta-Tf zwischen 1 und 50 °C; und
b2) Stabilisierung der Erwärmung durch Aufrechterhaltung der maximalen Mischtemperatur Ta während der Haltedauer von wenigstens 10 Sekunden, wobei die Haltedauer bevorzugt zwischen 20 Sekunden und 10 min liegt;
c) Entnahme der Mischung aus dem Innenmischer oder dem Schneckenextruder und optional Abkühlen; und dann
d) Mechanische Bearbeitung der Vorläufermischung unter vorheriger Zugabe des Vernetzungssystems, das Schwefel und/oder ein Peroxid umfasst, um die vernetzbare Zusammensetzung zu erhalten.

15. Verfahren zur Herstellung einer vernetzbaren Zusammensetzung nach Anspruch 14, wobei das Erhitzen in Schritt b) realisiert wird durch die Verwendung von:
- in dem genannten internen Mischer:
einer Scherrate des Reaktionsgemisches im Innenmischer von wenigstens 80 s⁻¹, bevorzugt von wenigstens 150 s⁻¹, beispielsweise umgesetzt bei einer Drehzahl der Rotorblätter im Innenmischer zwischen 10 und 200 U/min,
bevorzugt zwischen 50 und 120 U/min, und/oder einer Doppelwand im Innenmischer, die ein Wärmeträgerfluid aufnimmt, und/oder unter Verwendung eines Füllgrads des Innenmischers von mehr als 100 %; oder
- in dem genannten Schneckenextruder von z. B. elektrischen Heizelementen, mit denen der Extruder ausgestattet ist.

## Claims

1. A crosslinkable rubber composition based on at least one elastomer, the composition comprising other ingredients which include a crosslinking system and a thermoplastic polymeric phase which has at least one melting temperature Tm and which is dispersed in said at least one elastomer in the form of nodules, the crosslinkable composition comprising the product:
a) of a melt reaction by thermomechanical working of a reaction mixture comprising said at least one elastomer and said other ingredients, with the exception of the crosslinking system, to obtain a precursor mixture of the crosslinkable composition, then
b) of mechanical working of said precursor mixture with prior addition of the crosslinking system to obtain the crosslinkable composition,
wherein:
- the nodules have a weight-average greatest transverse dimension of between 10 nm and 10 µm,
- said reaction comprises heating of the reaction mixture up to a maximum compounding temperature Ta which is greater than the highest of said at least one melting temperature Tm of the thermoplastic polymeric phase and which is maintained for a holding time, and
- the crosslinking system comprises sulfur when said at least one elastomer is unsaturated and said thermoplastic polymeric phase comprises saturated polymer chains, and comprises a peroxide when said at least one elastomer is saturated.

2. The crosslinkable composition as claimed in claim 1, in which:
- the nodules have a weight-average greatest transverse dimension of between 100 nm and 10 µm,
- the holding time of said maximum compounding temperature Ta is at least 10 seconds.

3. The crosslinkable composition as claimed in claim 1 or 2, wherein the crosslinkable composition comprises, as powdered filler dispersed in said at least one elastomer, from 0 to 100 phr of an organic filler such as carbon black and from 0 to 70 phr of a non-reinforcing inorganic filler other than a silica (phr: parts by weight per 100 parts of elastomer(s)), and preferably wherein the crosslinkable composition is completely free from organic or inorganic powdered filler.

4. The crosslinkable composition as claimed in one of claims 1 to 3, wherein the crosslinkable composition has a scorch resistance measured according to the standard ISO 289-2 via t5 and t35 times without premature crosslinking of the composition which are both greater than 17 minutes and preferably greater than 20 minutes, t5 and t35 relating to Mooney viscosity increments ML(1+4) at 125°C relative to the initial Mooney viscosity respectively of +5 and +35 points.

5. The crosslinkable composition as claimed in one of claims 1 to 4, wherein the crosslinking system comprises sulfur and optionally additionally a peroxide, said at least one elastomer being a rubber chosen from:
- olefinic rubbers, such as ethylene-alpha-olefin copolymers such as for example ethylene-propylene (EPM) copolymers and ethylene-propylene-diene (EPDM) terpolymers, and
- diene rubbers obtained at least in part from conjugated diene monomers, such as natural rubber (NR), isoprene homopolymers and copolymers, and butadiene homopolymers and copolymers, and
wherein said thermoplastic polymeric phase comprises at least one saturated polymer preferably chosen from functionalized or non-functionalized aliphatic or aromatic polyolefins, such as for example homopolymers or copolymers of ethylene or of propylene,
and preferably wherein said at least one elastomer is an EPDM having a mass content of units derived from ethylene of between 15% and 80%, and said thermoplastic polymeric phase comprises at least one said aliphatic polyolefin chosen from ethylene homopolymers, propylene homopolymers and polypropylene-ethylene-diene terpolymers having a mass content of units derived from ethylene of between 1% and 15%.

6. The crosslinkable composition as claimed in one of claims 1 to 4, wherein the crosslinking system comprises a peroxide and optionally additionally sulfur, said at least one elastomer being saturated and said thermoplastic polymeric phase comprising saturated or unsaturated polymer chains, and wherein preferably said at least one elastomer is a silicone rubber for example chosen from polydimethylsiloxanes (PDMS), and said thermoplastic polymeric phase comprises at least one saturated polymer for example chosen from phenyl silicone or alkyl silicone resins.

7. The crosslinkable composition as claimed in one of the preceding claims, wherein the crosslinkable composition comprises said thermoplastic polymeric phase in an amount of between 1 and 150 phr (phr: parts by weight per 100 parts of elastomer(s)) and preferably of between 5 and 70 phr, and wherein said nodules formed by said thermoplastic polymeric phase have said weight-average greatest transverse dimension of between 150 nm and 3 µm, preferably between 300 nm and 2 µm, said nodules being for example spherical or ellipsoidal.

8. A crosslinked rubber composition, wherein the crosslinked composition is the product of thermal crosslinking of the crosslinkable composition as claimed in one of the preceding claims by chemical reaction with said crosslinking system,
preferably wherein the crosslinked composition comprises, as powdered filler dispersed in said at least one elastomer, from 0 to 100 phr of an organic filler such as carbon black and from 0 to 70 phr of an inorganic filler other than a silica, and preferably wherein the crosslinked composition is completely free from said organic or inorganic powdered filler,
preferably wherein the crosslinked composition has:
- a density of less than 1.10, preferably of less than or equal to 1, and/or
- a volume resistivity, measured according to the standard IEC 62631 3-1, of greater than 10¹⁰ Ω·cm and preferably of greater than 10¹⁴ Ω·cm,
and preferably wherein the crosslinked composition has a Shore A hardness measured according to the standard ASTM D2240 and a ratio G' 0.5% / G' 20% of storage moduli G' relative to the complex shear moduli G* satisfying at least one of the following conditions (i) and (ii) at 100°C:
(i) G' 0.5% / G' 20% ≤ 1.50 if the Shore A hardness is from 40 to 50, ≤ 1.80 if the Shore A hardness is from 51 to 60, and ≤ 2.00 if the Shore A hardness is from 51 to 60,
(ii) tan delta at 0.5% strain ≤ 0.080, preferably ≤ 0.050,
G' 0.5% and G' 20% being measured at respective dynamic strain amplitudes of 0.5% and 20% on double shear test specimens crosslinked at 177°C and subjected to a shear strain sweep of 0.5% to 60% at the same frequency of 1.7 Hz and the same temperature of 100°C, and tan delta representing the loss factor measured during said strain sweep.

9. The crosslinked composition as claimed in claim 8, wherein said at least one elastomer comprises an olefinic rubber such as an EPM or EPDM and said thermoplastic polymeric phase comprises at least one aliphatic polyolefin, and wherein the crosslinked composition has a Shore A hardness measured according to the standard ASTM D2240 and a ratio G' 30Hz / G' 0.3Hz of storage moduli G' relative to the complex shear moduli G* and a loss factor tan delta satisfying at least one of the following conditions (i) and (ii) at 100°C:
(i) G' 30Hz / G' 0.3Hz ≤ 1.20 if the Shore A hardness is from 51 to 60 and ≤ 1.10 if the Shore A hardness is from 61 to 70,
(ii) tan delta at 3 Hz ≤ 0.80 if the Shore A hardness is from 51 to 60 and ≤ 0.10 if the Shore A hardness is from 61 to 70,
G' 30Hz and G' 0.3Hz being measured at a dynamic strain amplitude of 0.5% on double shear test specimens crosslinked at 177°C and subjected to a frequency sweep of 0.100 Hz to 30 000 Hz at the same temperature of 100°C, and tan delta being measured at 3 Hz during said frequency sweep;
or wherein:
said at least one elastomer comprises an olefinic rubber such as an EPM or EPDM, or a diene rubber derived at least in part from a conjugated diene monomer such as natural rubber, wherein said thermoplastic polymeric phase comprises at least one aliphatic polyolefin, and wherein the crosslinked composition has a Shore A hardness measured according to the standard ASTM D2240 and a ratio of moduli M 155Hz / M 15Hz and a loss factor tan D at 15 Hz which are measured at 23°C via a frequency sweep according to the standard ISO 4664 by a Metravib^{®} viscosity analyzer on Metravib^{®} block-type test specimens and which satisfy at least one of the conditions (i) and (ii):
(i) M 155Hz / M 15Hz ≤ 1.50 if the Shore A hardness is from 40 to 50 and ≤ 2.00 if the Shore A hardness is from 61 to 70,
(ii) tan D at 15 Hz ≤ 0.10 if the Shore A hardness is from 40 to 50, ≤ 0.15 if the Shore A hardness is from 51 to 60, and ≤ 0.20 if the Shore A hardness is from 61 to 70.

10. The crosslinked composition as claimed in claim 8 or 9, wherein said at least one elastomer comprises an olefinic rubber such as an EPM or EPDM and said thermoplastic polymeric phase comprises at least one aliphatic polyolefin, and wherein the crosslinked composition satisfies at least one of the following conditions (i) to (iii):
(i) an elongation at break, measured in uniaxial tension according to the standard ASTM D 412, of greater than 250% and preferably greater than 400%;
(ii) a breaking stress, measured in uniaxial tension according to the standard ASTM D 412, of greater than 4 MPa and preferably greater than 12 MPa; and
(iii) a Shore A hardness measured after 3 seconds according to the standard ASTM D2240 which is greater than 40 and preferably equal to or greater than 60.

11. The crosslinked composition as claimed in claim 8, wherein said at least one elastomer comprises a silicone rubber preferably chosen from polydimethylsiloxanes (PDMS) and said thermoplastic polymeric phase comprises at least one saturated polymer preferably chosen from phenyl silicone or alkyl silicone resins, and wherein the crosslinked composition is completely free from said powdered filler such as silica;
or wherein said at least one elastomer comprises a diene rubber derived at least in part from a conjugated diene monomer, such as natural rubber, and said thermoplastic polymeric phase comprises at least one aliphatic polyolefin, and wherein the crosslinked composition satisfies at least one of the following conditions (i) to (iii):
(i) at least one of the following secant moduli M100, M200 and M300, at 100%, 200% and 300% strain, respectively, measured in uniaxial tension according to the standard ASTM D 412:
M100 of greater than 3 MPa, preferably equal to or greater than 5 MPa,
M200 of greater than 6 MPa, preferably equal to or greater than 8 MPa,
M300 of greater than 11 MPa, preferably equal to or greater than 13 MPa;
(ii) a breaking stress, measured in uniaxial tension according to the standard ASTM D 412, of greater than 13 MPa and preferably greater than 18 MPa; and
(iii) a Shore A hardness measured after 3 seconds according to the standard ASTM D2240 which is greater than 45 and preferably equal to or greater than 60.

12. A mechanical member having a dynamic function chosen in particular from anti-vibratory supports and elastic articulations for motorized vehicles or industrial devices, said member comprising at least one elastic part which is composed of a crosslinked rubber composition and which is suitable for being subjected to dynamic stresses, wherein said crosslinked composition is as claimed in one of claims 8 to 11.

13. A sealing element chosen in particular from seals for vehicle bodywork and sealing profiles for buildings, said sealing element comprising an elastic part which is composed of a crosslinked rubber composition, in which the crosslinked rubber composition is as claimed in one of claims 8 to 11.

14. A process for preparing a crosslinkable composition as claimed in one of claims 1 to 7, wherein the process comprises the following steps:
a) introduction, into an internal mixer, for example a tangential or intermeshing internal mixer, or into a screw extruder, for example a twin-screw extruder, of said at least one elastomer and then said other ingredients, with the exception of said crosslinking system;
b) thermomechanical working in said internal mixer or in said screw extruder, comprising melt compounding of said reaction mixture with the exception of the crosslinking system to obtain a precursor mixture of the crosslinkable composition, step b) comprising
b1) heating said reaction mixture up to said maximum compounding temperature Ta which is greater than the highest of said at least one melting temperature Tm of said thermoplastic polymeric phase, preferably by a difference Ta-Tm of between 1 and 50°C; and
b2) stabilizing said heating by maintaining said maximum compounding temperature Ta for said holding time of at least 10 seconds, said holding time preferably being between 20 seconds and 10 minutes;
c) removal of the mixture from said internal mixer or said screw extruder, and optionally cooling it; and then
d) mechanical working of said precursor mixture with prior addition of said crosslinking system comprising sulfur and/or a peroxide to obtain the crosslinkable composition.

15. The process for preparing a crosslinkable composition as claimed in claim 14, wherein the heating of step b) is carried out by using:
- in said internal mixer:
a shear rate of said reaction mixture in the internal mixer of at least 80 s⁻¹, preferably of at least 150 s⁻¹, for example performed at a speed of rotation of the rotor blades in said internal mixer of between 10 and 200 rpm, and preferably of between 50 and 120 rpm, and/or
a jacket in the internal mixer which receives a heat transfer fluid, and/or
employing a degree of filling of the internal mixer of greater than 100%; or by using
- in said screw extruder, heating elements, for example electric heating elements, with which the extruder is equipped.
